(19) Europäisches Patentamt / European Patent Office / Office européen des brevets

(11) **EP 4 431 868 B1**

(12) **EUROPÄISCHE PATENTSCHRIFT**

(45) Veröffentlichungstag und Bekanntmachung des Hinweises auf die Patenterteilung:
**01.10.2025 Patentblatt 2025/40**

(21) Anmeldenummer: **23161361.3**

(22) Anmeldetag: **12.03.2023**

(51) Internationale Patentklassifikation (IPC):
**G01B 11/25** *(2006.01)*    **A61C 9/00** *(2006.01)*

(52) Gemeinsame Patentklassifikation (CPC):
**G01B 11/2513; A61C 9/006**

(54) **3D-SCANNER ZUR OPTISCHEN ABTASTUNG EINES OBJEKTS MITTELS LICHTMUSTER**

3D SCANNER FOR OPTICALLY SCANNING AN OBJECT USING LIGHT PATTERNS

SCANNER 3D POUR BALAYER OPTIQUEMENT UN OBJET À L'AIDE D'UN MOTIF LUMINEUX

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**18.09.2024 Patentblatt 2024/38**

(73) Patentinhaber: **CADstar Technology GmbH 5500 Bischofshofen (AT)**

(72) Erfinder:
• **WÖRNDL-AICHRIEDLER, Bernhard 5020 Salzburg (AT)**
• **ROSSMANN, Markus 5020 Salzburg (AT)**

(74) Vertreter: **Gebauer, Dieter Edmund Splanemann Patentanwälte mbB Rumfordstraße 7 80469 München (DE)**

(56) Entgegenhaltungen:
**US-A1- 2018 188 020    US-A1- 2020 096 640**

**Beschreibung**

Die vorliegende Erfindung liegt auf dem technischen Gebiet der zweidimensionalen (2D) optischen Abtastung der Oberfläche eines Objekts mittels Lichtmuster zum Erzeugen einer digitalen dreidimensionalen (3D-)Darstellung des Objekts. Insbesondere betrifft die Erfindung einen 3D-Scanner, der geeignet ist, die Oberfläche eines Objekts mit Lichtmustern abzutasten. Eine bevorzugte Anwendung ist im Bereich der Dentaltechnik zum optischen Abtasten der Oberflächen von Dentalobjekten, insbesondere in der Ausgestaltung des 3D-Scanners als Desktop-Scanner.

3D-Scanner zur optischen Abtastung von Objekten sind aus der Praxis bekannt. Solche 3D-Scanner funktionieren im Wesentlichen durch die Projektion eines zweidimensionalen Lichtstreifenmusters auf die Oberfläche des optisch abzutastenden Objekts. Ein Teil des Lichtstrahls wird von der Oberfläche des Objekts reflektiert und von einer oder mehreren Kameras erfasst, um Bilder des von der Oberfläche reflektierten Lichtstrahls unter einem von Null verschiedenen Winkel zur Projektionsrichtung aufzunehmen. Mittels einer geeigneten Projektionsgeometrie, wie z.B. Triangulation, können Informationen über die räumliche Lage einzelner Punkte der Oberfläche des Objekts gewonnen werden, sodass eine digitale 3D-Darstellung des Objekts rechnerisch ermittelt werden kann. Typischerweise werden zur Ableitung der Koordinaten der Objektoberfläche das Objekt und die Projektionseinheit relativ zueinander bewegt, sodass neue Bilder aufgenommen werden können, aus denen die 3D-Koordinaten für andere Oberflächenbereiche des Objekts abgeleitet werden. Ein derartiges Verfahren ist dem Fachmann allgemein z.B. unter dem Begriff "Streifenlichtprojektion" bekannt und wurde bereits vielfach in der Patentliteratur beschrieben (siehe z.B. DE 19608632 A1). Im Handel sind auf der Streifenlichtprojektion basierende 3D-Scanner verfügbar.

US 2018/188020 A1 offenbart einen 3D-Scanner aufweisend eine Kamera im "rolling-shutter"-Modus und einen Projektor, wobei die Bildfrequenz der Projektionseinheit dem 3-fachen der Bildfrequenz der Kamera entspricht, wobei während eines Belichtungszyklus der Kamera vier verschiedene Muster zeitversetzt und synchron mit der Zeilenbelichtung an vier verschiedene Positionen in Bezug auf die Ausleserichtung projiziert werden.

Bei der optischen Oberflächenabtastung wird der von einem Objekt reflektierte Lichtstrahl von mindestens einer Kamera mit einem Bildsensor erfasst und in ein elektrisches Signal umgewandelt. Der Bildsensor (Flächensensor) umfasst eine Vielzahl lichtempfindlicher Halbleiterelemente (Pixel) in einer zweidimensionalen Anordnung, welche das Bildfeld bildet, wobei jedes Halbleiterelement einen eigenen Photodetektor darstellt, durch den Elektronen aus den einfallenden Photonen erzeugt werden können. Während der Belichtungszeit werden die Elektronen, die das einfallende Licht im Halbleitermaterial freisetzt, gesammelt. Anschließend wird die Ladungsmenge pro Pixel mit der eingesetzten Sensorauslesetechnik ausgelesen, wobei die erzeugte Ladung durch einen Wandler-Transistor in ein Spannungssignal umgewandelt wird. Die Belichtungszeit kann über einen mechanischen oder elektronischen Verschluss gesteuert werden.

In 3D-Scannern werden zunehmend aus Siliziumbasis in CMOS-Technologie hergestellte Bildsensoren eingesetzt, deren Leistungsfähigkeit in jüngerer Zeit immer weiter gesteigert werden konnte und sogar jene von CCD-Sensoren übertrifft. Das Auslesen derartiger Bildsensoren kann in verschiedenen Betriebsarten erfolgen. Beim sogenannten Global-Shutter-Modus werden alle Pixel des Bildsensors zum gleichen Zeitpunkt belichtet. Am Ende der Belichtungszeit wird die in jedem Pixel angesammelte Ladung an einen dem jeweiligen Pixel zugeordneten Speicherkondensator übertragen und dort zwischengespeichert bzw. in eine proportionale Spannung umgewandelt, welche dann zwischengespeichert wird. Die zwischengespeicherten Signale werden anschließend zeilenweise ausgelesen. Bildsensoren für den Global-Shutter-Modus weisen jedoch eine komplexere Struktur auf, da die benötigten Speicherkondensatoren zusätzlichen Platz im jeweiligen Pixel beanspruchen. Vorteilhaft ist der sogenannte Rolling-Shutter-Modus, bei dem die einzelnen Pixelzeilen des Bildsensors sequentiell nacheinander belichtet werden und jede Pixelzeile am Ende der Belichtung ausgelesen wird. Die Steuerung der Belichtung erfolgt in bekannter Weise dadurch, dass vor Beginn der Belichtung die in den zu belichtenden Pixeln angesammelte Ladung durch Verbindung des Pixels mit einem Rücksetzpotential gelöscht wird und während der vorgegebenen Belichtungszeit die im lichtempfindlichen Element erzeugte Ladung akkumuliert wird. Nach Ablauf der Belichtungszeit wird die im lichtempfindlichen Element akkumulierte Ladung an den Wandler-Transistor transferiert und von diesem in ein entsprechendes Spannungssignal umgewandelt, welches über die Spaltenleitung an die Signalverarbeitungsschaltung transferiert wird und dort verstärkt und verarbeitet wird. Im Rolling-Shutter-Modus werden demnach die einzelnen Pixelzeilen des Bildfeldes zeitversetzt (zeitlich gestaffelt) belichtet, wobei die für das Auslesen Pixelzeile benötigte Zeit den Zeitversatz vorgibt, der zwischen den einzelnen Pixelzeilen des Bildfeldes auftritt.

In der praktischen Anwendung, insbesondere in der Dentaltechnik, ist es wichtig, dass die optische Abtastung der Oberfläche von Objekten zum Erzeugen einer digitalen 3D-Darstellung der Objekte innerhalb einer möglichst kurzen Zeitspanne, aber dennoch hinreichend genau erfolgt, sodass beispielsweise eine Zahnrestauration möglichst zeit- und kosteneffizient hergestellt werden kann, ohne hierbei die unerlässlichen Anforderungen an Güte und Qualität zu mindern.

Demgegenüber besteht die Aufgabe der vorliegenden Erfindung darin, einen verbesserten 3D-Scanner zur Verfügung zu stellen, mit dem digitale 3D-Darstellungen von Objekten innerhalb einer sehr kurzen Zeitspanne mit einer hinreichenden Bildqualität erstellt werden können.

Diese und weitere Aufgaben werden nach dem Vorschlag der Erfindung durch einen 3D-Scanner gemäß dem unabhängigen Patentanspruch gelöst. Vorteilhafte Ausgestaltungen der Erfindung ergeben sich aus den Unteransprüchen.

Erfindungsgemäß ist ein 3D-Scanner zur optischen Abtastung der Oberfläche eines Objekts gezeigt. Der 3D-Scanner ist vorzugsweise in der Dentaltechnik zum optischen Abtasten von Dentalobjekten wie z.B. Ober- und Unterkiefer anwendbar, hier vorzugsweise als Desktop-Scanner.

Der 3D-Scanner umfasst eine oder mehrere Scan-Einheiten, wobei jede Scan-Einheit eine Projektionseinheit und eine oder mehrere Kameras aufweist. Die Projektionseinheit dient zum Projizieren von Bildern (Frames), in denen Lichtmuster, vorzugsweise Streifenlichtmuster, enthalten sind. Die Bildfrequenz (Frame Rate) der Projektionseinheit entspricht dem N-fachen einer Bildfrequenz der mindestens einen Kamera, wobei N eine natürliche Zahl größer 1 ist (N≥1). Die Bildfrequenz der Projektionseinheit bezieht sich auf die Anzahl der projizierten (Einzel-)Bilder (Frames) pro Sekunde, welche typischerweise in der Einheit fps (frames per second) angegeben ist. Die Bildfrequenz der Kamera bezieht sich auf die Bildwiederholrate zur Aufnahme von (Einzel-)Bildern (Frames) auf Grundlage eines sensor- oder kamerainternen Timings. In entsprechender Weise wird die Bildwiederholrate der Kamera in der Einheit fps (frames per second) angegeben. Die Scan-Einheit ist so konfiguriert, dass die Projektionseinheit Lichtmuster enthaltende Bilder auf die Oberfläche eines Objekts projiziert und die von der Oberfläche reflektierten Bilder von der einen oder mehreren Kameras aufgenommen werden.

Jede Kamera verfügt über einen elektro-optischen Sensor bzw. Bildsensor (Flächensensor), insbesondere CMOS-Bildsensor, mit einer Vielzahl von Bildpunkten (Pixeln). Die Pixel sind in Zeilen und Spalten eines Bildfeldes angeordnet, wobei ein jedes Pixel zumindest ein lichtempfindliches Element, um aus entlang einer Belichtungsrichtung einfallendem Licht elektrische Ladung zu erzeugen, und einen Wandler-Transistor umfasst, um eine von dem lichtempfindlichen Element erzeugte Ladung in ein Spannungssignal an einem Ausgang des Wandler-Transistors umzuwandeln.

Die zweidimensionale Anordnung der Pixel entspricht dem Bildfeld (Array) des Bildsensors. Die Pixel sind in einer Vielzahl von Pixelzeilen angeordnet sind, die sich jeweils entlang einer ersten Richtung (x) erstrecken, und in einer hierzu senkrechten zweiten Richtung (y) zueinander parallel, d.h. in einer Reihe bzw. reihenförmigen Abfolge, angeordnet sind . Die Bildfläche des Bildsensors ist rechteckförmig oder quadratisch.

Die Kameras sind jeweils so eingerichtet, dass die Pixel des Bildsensors im Rolling-Shutter-Modus belichtet und ausgelesen werden, bei dem die Belichtung der Pixelzeilen in zeitlicher Staffelung bzw. mit einem zeitlichen Versatz zeilenweise erfolgt und die Pixelzeilen, unmittelbar nach deren Belichtungsende, sequenziell ausgelesen werden.

Entsprechend der Bildfläche des Bildsensors sind die von der Projektionseinheit projizierten Bilder jeweils in Form eines Rechtecks oder Quadrats ausgebildet. Jedes projizierte Bild weist eine erste Richtung (x') und eine hierzu senkrechte zweite Richtung (y') auf, wobei die erste Richtung (x') des projizierten Bilds der ersten Richtung (x) des Bildsensors und die zweite Richtung (y') des projizierten Bilds der zweiten Richtung (x) des Bildsensors zugeordnet ist. Jedes projizierte Bild ist der Bildfläche des Bildsensors eineindeutig (d.h. 1:1) zugeordnet. Mit anderen Worten, die projizierten Bilder werden der Bildfläche des Bildsensors jeweils so zugeordnet, dass ein Bildbereich eines projizierten Bilds für die Belichtung eines entsprechenden Sensorbereichs der Bildfläche des Bildsensors dient. Mithin sind den Pixelzeilen des Bildsensors in analoger Weise zeilenförmige Bildbereiche des projizierten Bilds (1:1) zugeordnet, sodass eine Pixelzeile durch einen zugeordneten zeilenförmigen Bildbereich belichtet wird. Für beliebige Bildbereiche gilt, dass sie entsprechenden Sensorbereichen 1:1 zugeordnet sind.

Die Bilder weisen eine stets gleiche Abmessung entlang der zweiten Richtung (y') auf, wobei sich die Abmessung, ausgehend von einem ersten Bildrand zu einem zweiten Bildrand entlang der zweiten Richtung (y') bemisst. Bei senkrechter Blickrichtung kann der erste Bildrand als oberer Rand, der zweite Bildrand als unterer Bildrand verstanden werden.

Die Pixelzeilen des Bildsensors werden in jeweiligen Durchläufen der Reihe nach zeitlich gestaffelt belichtet und zeilenweise ausgelesen. Im Sinne vorliegender Erfindung wird das einmalige Belichten und Auslesen aller Pixelzeilen entlang der reihenförmigen Abfolge von Pixelzeilen als "Durchlauf" bezeichnet. Die Bilder weisen jeweils eine Abmessung SF in einer Richtung auf, die dem zeilenweisen Auslesen der Pixelzeilen, d.h. entlang der reihenförmigen Anordnung der Pixelzeilen, zugeordnet ist. Entlang dieser Richtung, die dem zeilenweisen Auslesen der Pixelzeilen zugeordnet ist, weisen in entsprechender Weise Bildbereiche eine Abmessung SR und Lichtmuster eine Abmessung SP auf. In der hierzu senkrechten Richtung, d.h. in Richtung der Pixelzeilen, sind die Abmessungen der Bilder, Bildbereiche und Lichtmuster jeweils so gewählt, dass alle Pixel einer selben Pixelzeile belichtet werden.

Jedes projizierte Bild weist mindestens ein Lichtmuster auf, vorzugsweise ein Streifenlichtmuster. Das Lichtmuster ist entsprechend der Form der Bilds rechteckförmig oder quadratisch, wobei die Abmessung des Lichtmusters in der ersten Richtung (x') jener des projizierten Bilds entspricht. Die Abmessung des Lichtmusters SP in der zweiten Richtung (y') kann von jener des projizierten Bilds abweichen. Mithin kann sich das Lichtmuster vollständig oder nur teilweise über das Bild erstrecken, d.h. das Lichtmuster kann sich auch nur über einen Teilbereich eines Bilds erstrecken, wobei die Position innerhalb des Bilds wählbar ist. In entsprechender Weise verfügt das Lichtmuster entlang der zweiten Richtung (y') über einen ersten Lichtmusterrand und einen zweiten Lichtmusterrand. Wenn ein Lichtmuster ein Bild vollständig ausfüllt, grenzt der erste Lichtmusterrand an den ersten Bildrand und gleichzeitig der zweite Lichtmusterrand an den zweiten Bildrand an. Wenn die Lichtmusterabmessung SP kleiner als die Bildabmessung SF ist, kann

i) der erste Lichtmusterrand an den ersten Bildrand angrenzen und zugleich der zweite Lichtmusterrand nicht an den zweiten Bildrand angrenzen, oder

ii) der erste Lichtmusterrand nicht an den ersten Bildrand angrenzen und zugleich der zweite Lichtmusterrand nicht an den zweiten Bildrand angrenzen, oder

iii) der erste Lichtmusterrand nicht an den ersten Bildrand angrenzen und zugleich der zweite Lichtmusterrand an den zweiten Bildrand angrenzen.

Die Zuordnung zwischen Bild und Bildfläche des Bildsensors ist auch dann gegeben, wenn ein Lichtmuster ein projiziertes Bild nicht vollständig ausfüllt und in die übrigen Bereiche des Bilds gegebenenfalls kein Lichtmuster projiziert wird.

Wie bereits ausgeführt, beträgt eine Bildfrequenz der Projektionseinheit dem N-fachen einer Bildfrequenz der mindestens einen Kamera, wobei N eine natürliche Zahl größer 1 ist. In einer Richtung, die dem zeilenweisen Auslesen der Pixelzeilen zugeordnet ist, weisen Bilder eine Bildabmessung SF, Bildbereiche eine Bildbereichsabmessung SR und Lichtmuster eine Lichtmusterabmessung SP auf.

Der 3D-Scanner umfasst weiterhin eine Steuereinheit zur Steuerung der mindestens einen Scan-Einheit. Die Steuereinheit ist so konfiguriert, dass auf die Oberfläche eines Objekts verschiedene Lichtmuster projiziert werden, unter der Maßgabe, dass in einem jeweiligen Durchlauf zur sukzessiven (einmaligen) Belichtung aller Pixelzeilen des Bildsensors alle Pixelzeilen stets mit einem gleichen Lichtmuster belichtet werden. Die Steuereinheit ist dazu konfiguriert, aus den durch die eine oder mehreren Kameras aufgenommenen, reflektierten Bildern bzw. Lichtmuster eine digitale 3D-Darstellung eines Objekts rechnerisch zu ermitteln.

Gemäß einer Ausgestaltung der Erfindung, für die selbständiger Schutz beansprucht wird, wird pro Durchlauf ein Satz aus N+1 Bildern auf die Oberfläche des Objekts projiziert, wobei die Lichtmuster so projiziert werden, dass für die Lichtmusterabmessung SP gilt: $SP \geq SF * 2/(N+2)$. Mit anderen Worten, für die Lichtmusterabmessung SP gilt, dass sie mindestens der Bildabmessung SF, multipliziert mit 2, geteilt durch (N+2), entspricht.

Bei dieser Ausgestaltung wird in jedes Bild eines zu einem Durchlauf gehörenden Satzes ein Lichtmuster so projiziert, dass ein Bildbereich mit der Bildbereichsabmessung SR überdeckt wird, wobei für die Bildbereichsabmessung SR gilt $SR = SF * 2/(N+2)$. Das Lichtmuster mit der Lichtmusterabmessung SP, mit $SP \geq SF * 2/(N+2)$, überdeckt somit jedenfalls den Bildbereich und kann hierbei so groß wie der Bildbereich sein oder darüber hinausgehen. Zudem wird der Bildbereich, in jedem nachfolgenden Bild eines jeweiligen Satzes, um $SF * 1/(N+2)$ entlang der Richtung, die dem zeilenweisen Auslesen der Pixelzeilen zugeordnet ist, versetzt. Die Bildbereichsabmessung SR erstreckt sich analoger Weise von einem ersten (z.B. oberen) Bildbereichsrand zu einem zweiten (z.B. unteren) Bildbereichsrand. Mithin wandert der Bildbereich sukzessiv in den projizierten Bildern eines Satzes schrittweise vom ersten (z.B. oberen) Bildrand) zum zweiten (z.B. unteren) Bildrand, wobei im ersten Bild der erste Bildbereichsrand an den ersten Bildrand angrenzt und im letzten Bild der zweite Bildbereichsrand an den zweiten Bildrand angrenzt.

Bei dieser Ausgestaltung werden weiterhin in mindestens einem Satz in einem bis maximal N-1 aufeinander folgenden Bildern, endend mit dem (N+1')ten Bild, neben dem einen Lichtmuster, das zu dem Durchlauf gehört, jeweils ein oder mehrere weitere Lichtmuster, die zu nachfolgenden Durchläufen gehören, projiziert. Das eine oder die weiteren Lichtmuster werden zwischen dem einen Lichtmuster und dem ersten Bildrand projiziert. Hierbei grenzen das eine oder die weiteren Lichtmuster unmittelbar an das eine Lichtmuster an. Werden zwei oder mehr weitere Lichtmuster projiziert, werden die weiteren Lichtmuster umso näher zu dem einen Lichtmuster projiziert, je zeitlich näher ein weiterer Durchlauf folgt.

Somit kann dadurch, dass eine Belichtung eines Teils der Bildfläche des Bildsensors mit einem weiteren Lichtmuster schon dann erfolgt, wenn ein anderer Teil der Bildfläche noch mit den einen Lichtmuster belichtet wird, mithin durch ein Verschachteln der Belichtungen mit verschiedenen Lichtmustern, in vorteilhafter Weise erreicht werden, dass digitale 3D-Darstellungen von Objekten innerhalb einer sehr kurzen Zeitspanne mit gleichwohl hoher Bildqualität erstellt werden können. Dies ist ein großer Vorteil dieser Ausgestaltung.

Generell gilt, dass jeder Satz mindestens ein Bild aufweist, das zu mindestens einem weiteren Satz gehört. Mithin können Bilder auch zwei oder mehreren Sätzen bzw. Durchläufen angehören. Ein Satz von Bildern kann zwei oder noch mehr Bilder aufweisen, die einem oder mehreren weiteren Sätzen zugehörig sind.

Vorzugsweise werden in den N+1 Bildern eines jeweiligen Durchlaufs die Lichtmuster so projiziert, dass für die Lichtmusterabmessung SP gilt: $SP = SF * 2/(N+2)$. Mit anderen Worten, die Lichtmusterabmessung SP entspricht der Bildbereichsabmessung SR, sodass das Lichtmuster und der Bildbereich gleich groß sind. Dies ermöglicht eine besonders einfache Steuerung des 3D-Scanners.

Gemäß einer Ausgestaltung der Erfindung, für welche selbständiger Schutz beansprucht wird, entspricht in der mindestens einen Scan-Einheit die Bildfrequenz der Projektionseinheit dem 2-fachen der Bildfrequenz der mindestens einen Kamera, wobei pro Durchlauf ein Satz aus drei Bildern auf die Oberfläche des Objekts projiziert wird, wobei die Lichtmuster so projiziert werden, dass für die Lichtmusterabmessung SP gilt: $SP \geq SF * 1/2$. Zudem wird in jedes Bild eines jeweiligen Satzes ein Lichtmuster so projiziert, dass ein Bildbereich mit der Bildbereichsabmessung SR überdeckt wird, wobei gilt $SR = SF * 1/2$. Hierbei wird der Bildbereich in jedem nachfolgenden Bild eines jeweiligen Satzes, um $SF * 1/4$ entlang der Richtung, die dem zeilenweisen Auslesen der Pixelzeilen zugeordnet ist, versetzt. Weiterhin wird in mindestens einem Satz im dritten Bild ein weiteres Lichtmuster, das zu einem (unmittelbar) nachfolgenden Durchlauf gehört, projiziert. Das weitere Lichtmuster zwischen dem einen Lichtmuster und dem ersten (z.B. oberen) Bildrand projiziert.

Demnach wird pro Durchlauf des Bildsensors ein Satz aus drei Bildern auf die Oberfläche des Objekts projiziert, wobei jeder Satz aus einem ersten Bild, einem zweiten Bild und einem dritten Bild besteht. Hierbei wird in einem dritten Bild eines jeweiligen Durchlaufs ein Lichtmuster mit der halben Abmessung des dritten Bilds, bezogen auf die Richtung, die dem zeilenweisen Auslesen der Pixelzeilen zugeordnet ist, in die zweite (z.B. untere) Hälfte des dritten Bilds, projiziert, während ein hiervon verschiedenes, weiteres Lichtmuster mit der halben Abmessung des dritten Bilds, in die erste (z.B. obere) Hälfte des dritten Bilds projiziert wird. Das dritte Bild eines jeweiligen Durchlaufs ist das erste Bild eines zeitlich unmittelbar darauffolgenden Durchlaufs.

Vorzugsweise wird bei unmittelbar vorstehender Ausgestaltung pro Durchlauf ein Satz aus drei Bildern auf die Oberfläche des Objekts projiziert, wobei die Lichtmuster so projiziert werden, dass für die Lichtmusterabmessung SP gilt: $SP = SF * 1/2$. Dies ermöglicht eine besonders einfache Steuerung des 3D-Scanners.

Alternativ sind in jedem zweiten Bild eines Satzes die Lichtmusterabmessung SP und die Bildabmessung SF gleich, das Lichtmuster erstreckt sich vollständig über das zweite Bild.

Vorzugsweise wird bei einem ersten Durchlauf zur Belichtung des Bildsensors ein Lichtmuster mit einer Lichtmusterabmessung SP, wobei gilt $SP = SF * 1/2$, in eine erste Hälfte des ersten Bilds projiziert, während in eine zweite Hälfte des ersten Bilds kein Lichtmuster projiziert wird, wobei die Aufteilung in das erste Bild und das zweite Bild auf die Richtung bezogen ist, die dem zeilenweisen Auslesen der Pixelzeilen zugeordnet ist.

Vorzugsweise wird bei einem letzten Durchlauf zur Belichtung des Bildsensors ein Lichtmuster mit einer Lichtmusterabmessung SP, wobei gilt $SP = SF * 1/2$, in eine zweite Hälfte des ersten Bilds projiziert, während in eine erste Hälfte des ersten Bilds kein Lichtmuster projiziert wird, wobei die Aufteilung in das erste Bild und das zweite Bild auf die Richtung bezogen ist, die dem zeilenweisen Auslesen der Pixelzeilen zugeordnet ist.

Vorzugsweise wird bei einem jeweiligen Durchlauf eine mittlere Pixelzeile des Bildsensors nur mit dem zweiten Bild belichtet.

Das Lichtmuster kann grundsätzlich beliebig ausgebildet sein und eine regelmäßige Abfolge heller und dunkler Bereich aufweisen, wobei ein Streifenlichtmuster bevorzugt ist.

Gemäß einer weiteren Ausgestaltung der Erfindung, für welche selbständiger Schutz beansprucht wird, weist der 3D-Scanner eine Objektaufnahme für zwei oder mehr Objekthalter auf, wobei jeder Objekthalter zur Platzierung eines Objekts dient. Vorzugsweise sind die Objekthalter jeweils um eine oder mehrere Rotationsachsen rotierbar. Vorzugsweise ist die Steuereinheit so konfiguriert, dass die Oberflächen von zwei oder mehr Objekten simultan optisch abgetastet werden.

Gemäß einer weiteren Ausgestaltung der Erfindung, für welche selbständiger Schutz beansprucht wird, verfügen die Objekthalter jeweils über einen Speicherbaustein mit gespeicherten Daten über den Objekthalter, wobei bei einem auf der Objektaufnahme angeordneten Objekthalter der Speicherbaustein datentechnisch mit der Steuereinheit verbunden ist. Hierbei ist die Steuereinheit so konfiguriert, dass die Daten des Speicherbausteins (vorzugsweise automatisch) ausgelesen werden.

Gemäß einer weiteren Ausgestaltung der Erfindung, für welche selbständiger Schutz beansprucht wird, sind die Projektionseinheit und die eine oder mehreren Kameras so synchronisiert sind, dass eine Belichtungszeit des Bildsensors einem Vielfachen eines RGB-Zyklus der Projektionseinheit entspricht.

Vorzugsweise ist der 3D-Scanner in Form eines Desktop-Scanners für die Dentaltechnik ausgebildet wobei die Oberfläche von Dentalobjekten, wie z.B. Ober- und Unterkiefer, optisch abgetastet werden kann.

Die verschiedenen Ausgestaltungen der Erfindung können einzeln oder in beliebigen Kombinationen realisiert sein. Insbesondere sind die vorstehend genannten und nachstehend erläuterten Merkmale nicht nur in den angegebenen Kombinationen, sondern auch in anderen Kombinationen oder in Alleinstellung einsetzbar, ohne den Rahmen der vorliegenden Erfindung zu verlassen.

Die Erfindung wird nachfolgend anhand von Ausführungsbeispielen näher erläutert, wobei Bezug auf die beigefügten Figuren genommen wird. Es zeigen in vereinfachter, nicht maßstabsgetreuer Darstellung:

Fig. 1     eine schematische Darstellung wesentlicher Komponenten des 3D-Scanners,

Fig. 2     eine Querschnittansicht eines Ausführungsbeispiels des 3D-Scanners in Form eines Desktop-Scanners für die Dentaltechnik,

Fig. 3       eine Querschnittansicht des 3D-Scanners von Figur 2 mit externem Computer,

Fig. 4       eine Querschnittansicht des 3D-Scanners von Figur 2 mit einem Artikulator,

Fig. 5A     eine schematische perspektivische Ansicht der Objektaufnahme des 3D-Scanners von Figur 2,

Fig. 5B     eine Querschnittansicht des Objekthalters des 3D-Scanners von Figur 2,

Fig. 6       ein Zeit-Ort-Diagramm eines Ausführungsbeispiels zur optischen Abtastung im 3D-Scanner,

Fig. 7       das Zeit-Ort-Diagramm von Figur 6 mit Belichtungs- und Auslesezeiten,

Fig. 8       ein Zeit-Ort-Diagramm eines weiteren Ausführungsbeispiels zur optischen Abtastung im 3D-Scanner.

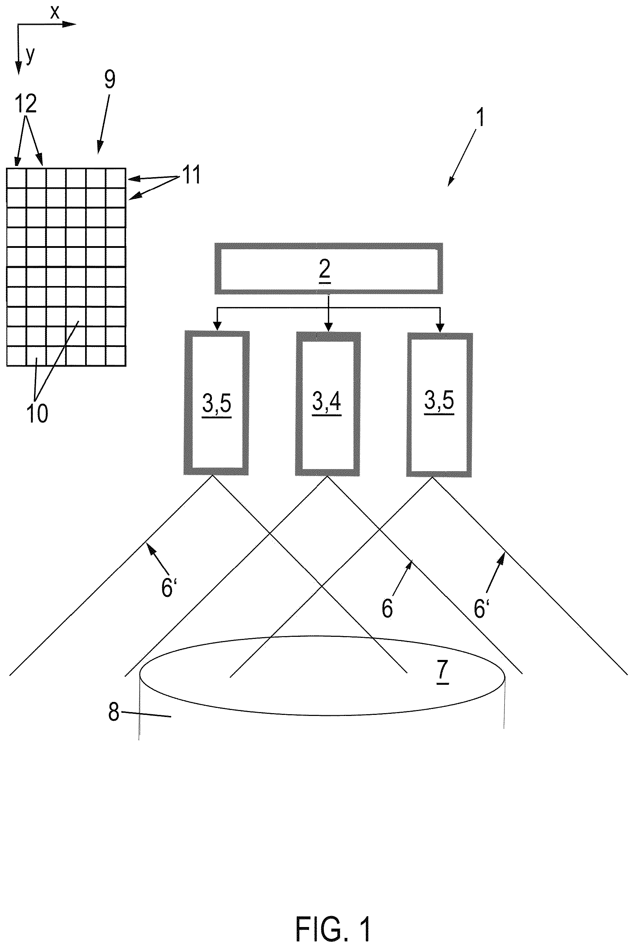

Sei zunächst Figur 1 betrachtet, worin anhand einer schematischen Darstellung wesentliche Komponenten des 3D-Scanners, welcher insgesamt mit der Bezugszahl 1 bezeichnet ist, veranschaulicht sind.

Demnach umfasst der 3D-Scanner 1 eine Steuereinheit 2 zur Steuerung und Kontrolle der verschiedenen Funktionen des 3D-Scanners 1 mittels eines Computerprogramms, sowie mindestens eine Scan-Einheit 3, die mit der Steuereinheit 2 datentechnisch verbunden ist. Die Scan-Einheit 3 umfasst eine Projektionseinheit 4 zur Projektion von Bildern (Frames), in denen Lichtmuster, vorzugsweise Streifenlichtmuster, enthalten sind. Die Steuereinheit 2 dient insbesondere zur Steuerung und Kontrolle der Projektionseinheit 4 und der beiden Kameras 5. Obgleich in Figur 1 zwei Kameras 5 beispielhaft veranschaulicht sind, versteht es sich, dass gleichermaßen nur eine einzige Kamera 5 oder mehr als zwei Kameras 5 für die mindestens eine Scan-Einheit 3 vorgesehen sein können.

Die Projektionseinheit 4 dient dazu, mittels eines Lichtstrahls 6, ein Bild mit einem Lichtmuster auf die Oberfläche 7 eines Objekts 8, vorzugsweise ein Dentalobjekt, zu projizieren. Der Lichtstrahl 6 wird von der Oberfläche 7 des Objekts 8 zum Teil reflektiert, wobei der reflektierte Lichtstrahl 6' unter einem von Null verschiedenen Winkel zur Projektionsrichtung von den beiden Kameras 5 erfasst wird. Bei dem Lichtmuster handelt es sich vorzugsweise um ein Streifenlichtmuster mit einer periodischen Anordnung heller Linien und dazwischen befindlicher dunkler Zwischenräume (Streifenlichtprojektion). Mittels bekannter Projektionsgeometrie, wie Triangulation, kann aus dem reflektierten Lichtstrahl 6' die räumliche Lage jedes einzelnen Punktes der Oberfläche 7 des Objekts 8 errechnet werden, sodass ein digitales 3D-Abbild des Objekts 8 rechnerisch erzeugt werden kann.

Um die komplette Oberfläche 7 des Objekts 8 zu erfassen, können das Objekt 8 und die Scan-Einheit 3 relativ zueinander bewegt werden, z.B. durch Rotation des Objekts 8 um eine oder mehrere Rotationsachsen, sodass weitere Bilder aufgenommen werden können, aus denen dann die 3D-Koordinaten für andere Oberflächenbereiche des Objekts 8 abgeleitet werden können. Dies ist dem Fachmann an sich bekannt, sodass hier nicht näher darauf eingegangen werden muss. In Figur 1 nicht gezeigt ist ein Objekthalter für die Lagerung und Positionierung des Objekts 8 relativ zur Scan-Einheit 3.

Die Kameras 5 weisen jeweils einen Bildsensor 9 mit einer Vielzahl von Bildpunkten bzw. Pixeln 10 auf (siehe Insert in Figur 1). Die Pixel 10 sind in einer zweidimensionalen Anordnung bzw. Array 13 in Pixelzeilen 11 und Pixelreihen 12 angeordnet. In der schematischen Darstellung in Figur 1 enthält jede Pixelzeile 11 sechs Pixel 10 und das Array 13 weist zehn Pixelzeilen 11 auf, wobei es sich versteht, dass in der Realität die Anzahl der Pixel 10 pro Pixelzeile 11 und die Anzahl der Pixelzeilen 11 in einem Array 13 wesentlich höher ist. Die Pixelzeilen 11 sind in einer zur Zeilenrichtung (x) senkrechten Richtung (y) über- bzw. untereinander liegend (stapelförmig) angeordnet, wodurch sich das Array 13 ergibt.

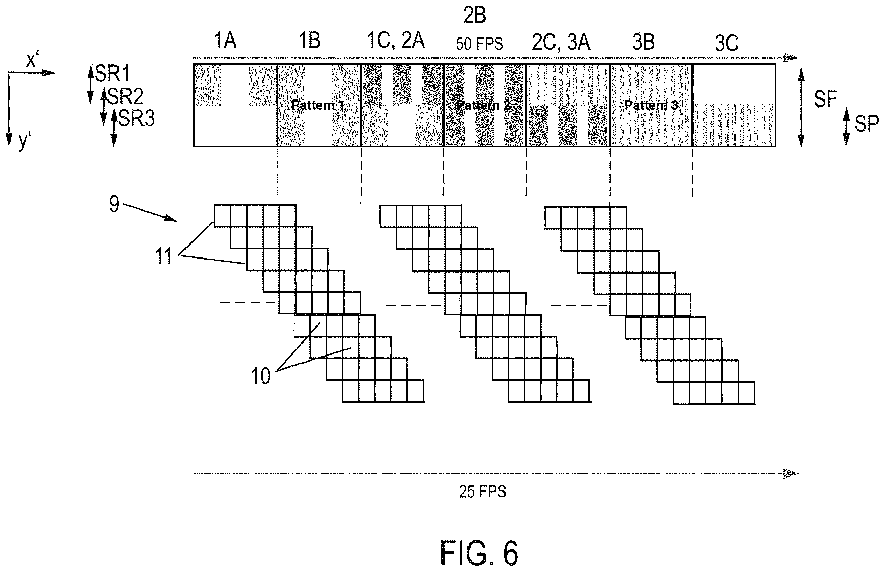

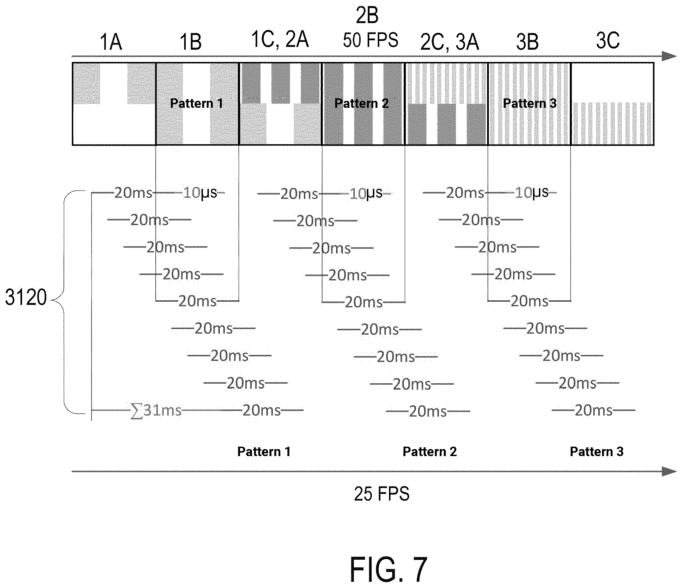

Die Kameras 5 sind jeweils so eingerichtet, dass der Bildsensor 9, bei dem es sich beispielsweise um einen CMOS-Bildsensor handelt, im Rolling-Shutter-Modus belichtet und ausgelesen wird. Hierbei werden die Pixelzeilen 1 zeitlich gestaffelt, d.h. mit einem zeitlichen Versatz, belichtet und zeilenweise ausgelesen. Begonnen wird mit der Belichtung einer ersten Pixelzeile 11 des Arrays 13, gefolgt von einem zeitlich späteren Beginn der Belichtung der unmittelbar benachbarten zweiten Pixelzeile 11 und so weiter, bis mit der Belichtung der letzten Pixelzeile 11 des Arrays 13 begonnen wird. Das Auslesen einer Pixelzeile 11 erfolgt unmittelbar nach Ende der Belichtung der Pixelzeile 11. Das einmalige Belichten und Auslesen aller Pixelzeilen 11 entspricht einem Durchlauf. Bei einem nachfolgenden Durchlauf wird wieder mit der Belichtung der ersten Pixelzeile 11 des 2D-Arrays 13 begonnen, gefolgt von einem zeitlich späteren Beginn der Belichtung der unmittelbar benachbarten zweiten Pixelzeile 11 und so weiter, bis mit der Belichtung der letzten Pixelzeile 11 des 2D-Arrays begonnen wird. Vorzugsweise, jedoch nicht zwingend, entspricht der zeitliche Versatz des Beginns der Belichtung zweier unmittelbar benachbarter Pixelzeilen 11 der Zeitspanne zum Auslesen einer Pixelzeile 11. Dies wird in Verbindung mit den Figuren 6 und 7 näher erläutert.

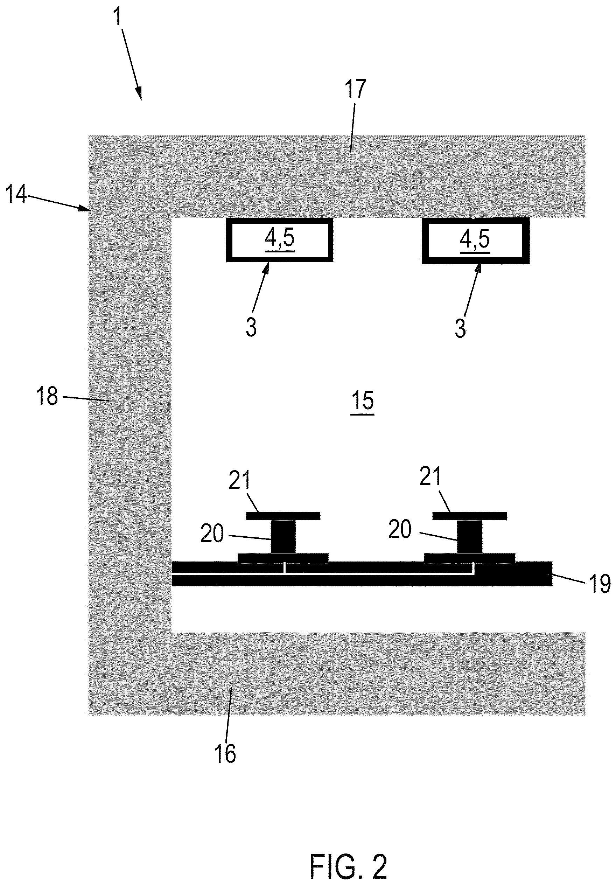

Im Weiteren wird eine Ausgestaltung des 3D-Scanners von Figur 1 in Form eines Desktop-Scanners für den Dentalbereich beschrieben. In Figur 2 ist ein Beispiel für einen 3D-Scanner 1 für den Dentalbereich in Form eines Desktop-Scanners in schematischer Weise in einer (vertikalen) Querschnittansicht veranschaulicht. Der 3D-Scanner 1 umfasst ein hier beispielsweise C-förmiges Grundgehäuse 14, das einen nach vorne und seitlich hin offenen Innenbereich 15 umgibt. Das C-förmige Grundgehäuse 14 setzt sich aus einem planen Bodenabschnitt 16, einem plane Deckabschnitt 17 und einer Boden- und Deckabschnitt verbindenden, planen Rückwand 18 zusammen. Befindet sich der 3D-Scanner 1 auf einer horizontalen Unterlage (z.B. auf einem Tisch) sind der Boden- und Deckabschnitt 16, 17 horizontal ausgerichtet, während die Rückwand 18 vertikal ausgerichtet ist. Der Innenbereich 15 ist von vorne (d.h. gegenüber der Rückwand 18) und von beiden Seiten her frei zugänglich, um den 3D-Scanner 1 mit optisch abzutastenden (zu scannenden) Dentalobjekten zu bestücken.

An der Vorderseite der Rückwand 18 ist eine Objektaufnahme 19 befestigt, an der ein oder mehrere Objekthalter 20, hier beispielsweise zwei Objekthalter 20, angebracht werden können. Die Objektaufnahme 19 ist beispielsweise plattenförmig ausgebildet. Die beiden Objekthalter 20 dienen jeweils zur Lagerung eines zu scannenden Dentalobjekts und verfügen zu diesem Zweck jeweils über einen Teller 21, auf dessen Oberseite ein Dentalobjekt platziert werden kann. Die Objektaufnahme 19 befindet sich vollständig im Innenbereich 15.

Auf der Unterseite des Deckabschnitts 17 sind, entsprechend der Anzahl der Objekthalter 20, zwei separate Scan-Einheiten 3 angeordnet, wobei eine Scan-Einheit 3 dem einen Objekthalter 20 und die andere Scan-Einheit 3 dem anderen Objekthalter 20 zugeordnet ist. Jede Scan-Einheit 3 umfasst eine Projektionseinheit 4 und hier beispielsweise vier Kameras 5, was in Figur 2 nicht näher dargestellt ist. Mittels der Projektionseinheit 4 einer jeweiligen Scan-Einheit 3 können Lichtmuster, vorzugsweise Streifenlichtmuster, enthaltende Bilder auf die Oberfläche eines auf dem zugehörigen Objekthalter 20 platzierten Dentalobjekts projiziert werden. Der von der Projektionseinheit 4 ausgesandte Lichtstrahl wird von der Oberfläche des Dentalobjekts zum Teil reflektiert wird und der reflektierte Lichtstrahl wird unter einem von Null verschiedenen Winkel zur Projektionsrichtung von den Kameras 5 der zugehörigen Scan-Einheit 3 erfasst, sodass eine digitale 3D-Darstellung des Dentalobjekts rechnerisch erzeugt werden kann. Die Projektionseinheiten 4 weisen als Lichtquellen beispielsweise handelsübliche Weisslicht-LEDs auf.

Um die komplette Oberfläche der auf den Objekthaltern 20 befindlichen Dentalobjekte zu erfassen, können die Dentalobjekte relativ zu den Scan-Einheiten 3 bewegt werden. Zu diesem Zweck ist die Objektaufnahme 19 mit einem an der Rückwand 18 angeordneten Drehteller gekoppelt, sodass die Objektaufnahme 19 um eine zur Rückwand 18 senkrechte (z.B. horizontale) Rotationsachse rotierbar ist. Zudem können die Objekthalter 20 um eine senkrecht zur Objektaufnahme 19 gerichtete Rotationsachse gedreht werden. Mithin kann ein auf einem Objekthalter 20 platziertes Dentalobjekt um zwei zueinander senkrechte Rotationsachsen im Raum bewegt werden, sodass die vollständige Oberfläche des Dentalobjekts durch die zugehörige Scan-Einheit 3 optisch abgetastet werden kann. Eine Steuerung der Rotationsbewegungen kann über Schrittmotoren erfolgen, die eine zuverlässige, genaue und schnelle Einstellung verschiedener Rotationspositionen ermöglichen.

In dem in Figur 2 veranschaulichten 3D-Scanner 1 sind zwei Objekthalter 20 mit jeweils zugehöriger Scan-Einheit 3 vorgesehen. Es versteht sich, dass der 3D-Scanner 1 eine kleinere oder größere Anzahl von Objekthaltern 20 mit jeweils zugehöriger Scan-Einheit 3 aufweisen kann. Zwei Objekthalter 20 mit zugehörigen Scan-Einheiten 3 ermöglichen in vorteilhafter Weise die gleichzeitige optische Abtastung der Oberfläche von zwei Dentalobjekten zur rechnerischen Ermittlung von digitalen 3D-Abbildern.

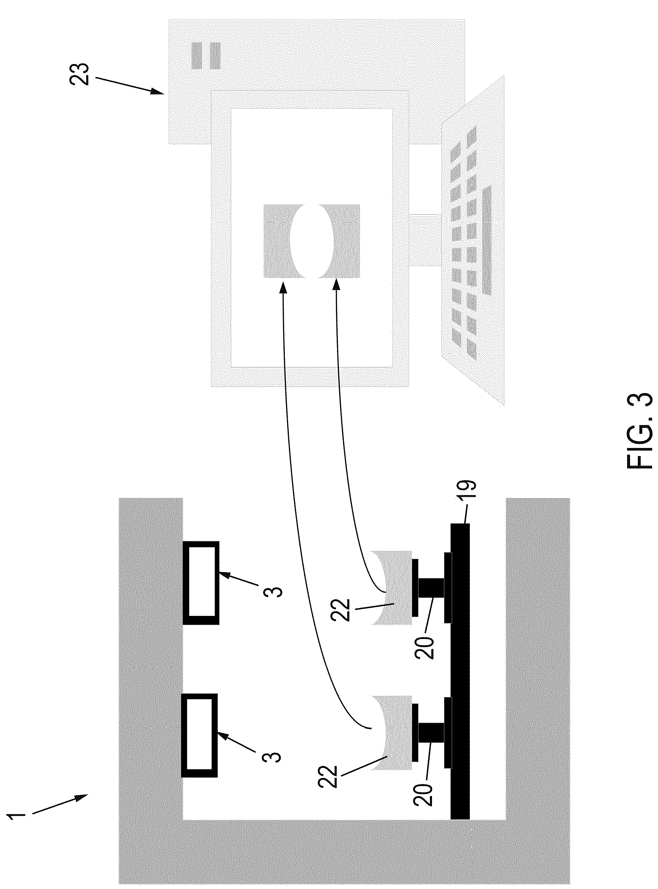

In Figur 3 ist der 3D-Scanner 1 von Figur 2 in einem typischen Arbeitsmodus mit zwei Dentalobjekten 22 dargestellt. Ein Dentalobjekt 22 befindet sich auf dem einen Objekthalter 20, das andere Dentalobjekt 22 auf dem anderen Objekthalter 20. Bei den Dentalobjekten 20 handelt es sich hier beispielsweise um plastische Modelle eines Ober- und Unterkiefers, die beispielsweise mittels einer Abdruckmasse geformt wurden. Es versteht sich, dass auch andere Dentalobjekte gescannt werden können.

Wie in Figur 3 veranschaulicht, ist der 3D-Scanner 1 mit einem externen Computer 23 datentechnisch verbunden. Der 3D-Scanner 1 weist zu diesem Zweck auf der Rückseite der Rückwand 18 elektrische Anschlüsse (z.B. USB-Schnittstelle) auf. Im Computer 23 ist die in Figur 1 veranschaulichte Steuereinheit 2 als Logikbaustein implementiert, durch welche die beiden Scan-Einheiten 3 und die Schrittmotoren zur relativen Positionierung der Dentalobjekte 22 ansteuerbar sind, um digitale 3D-Darstellungen der beiden Dentalobjekte 22 rechnerisch zu erzeugen. Dies ist in Figur 3 veranschaulicht, wo ein Monitor des Computers 23 die zugehörigen digitalen 3D-Darstellungen der beiden Dentalobjekte 22 anzeigt. Die beiden Dentalobjekte 22 können simultan optisch abgetastet werden, was einen erheblichen Zeitvorteil gegenüber einer sequenziellen optischen Abtastung mit sich bringt. Die beiden Dentalobjekte 22 werden zu diesem Zweck vorzugsweise gleichzeitig und in gleicher Weise bewegt, was steuerungstechnische Vorteile mit sich bringt. Der externe Computer 23 ist programmtechnisch zur Steuerung der Funktionen des 3D-Scanners 1 eingerichtet, zu welchem Zweck eine geeignete Software auf dem Computer 23 ausgeführt wird. Denkbar wäre, die Steuereinheit 2 im 3D-Scanner 1 selbst vorzusehen, sodass ein externer Computer 23 nicht erforderlich ist.

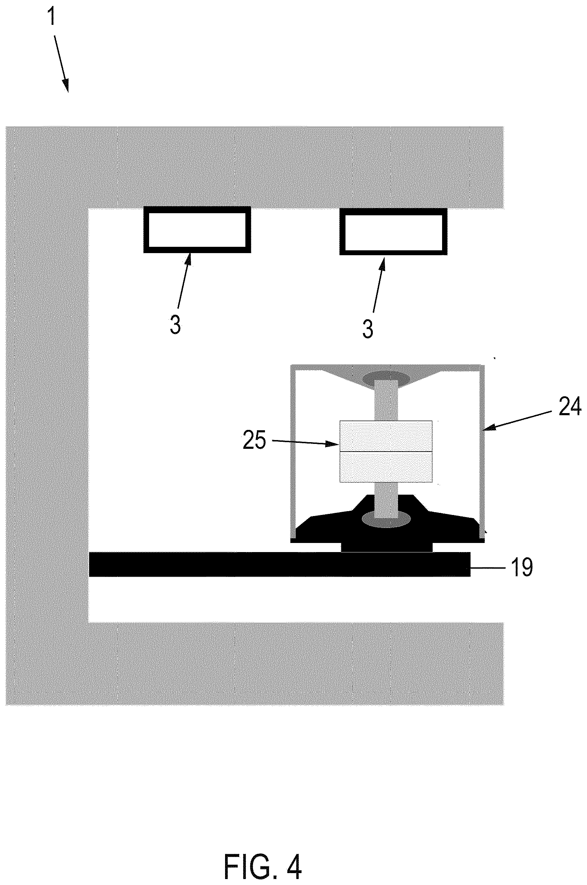

In Figur 4 ist der 3D-Scanner 1 in einem weiteren Arbeitsmodus gezeigt, bei der die Objektaufnahme 19 mit einem Artikulator 24 versehen ist, der von einer Scan-Einheit 3 optisch abgetastet wird. Wie dem Fachmann bekannt ist, können durch einen Artikulator die vielfältigen Kaubewegungen von Ober- und Unterkiefer simuliert werden, was für die Herstellung einer Zahnrestauration unerlässlich ist. Im Artikulator 24 befindet sich ein Kiefermodell 25 für Ober- und Unterkiefer. Mittels des Artikulators 24 können individuell justierte Artikulatoren anatomisch korrekt in die Scan-Software übertragen werden. Es können genaue Einstellungen des Artikulators 24 vermessen und in ein 3D-Modell umgewandelt werden. Dies muss nur einmal pro Artikulator durchgeführt werden. Anschließend können mithilfe der geeichten Objekthalter 20 Ober- und Unterkiefer als Dentalobjekte 22 gescannt werden, wobei eine genaue Ausrichtung der Dentalobjekte 22 auf den Koordinaten des jeweiligen Objekthalters 20 in Verbindung mit den Koordinaten des Artikulators 24 basiert. Ober- und Unterkiefer können anschließend rechnerisch in Okklusion gebracht werden. Dies ist ein besonderer Vorteil des 3D-Scanners 1.

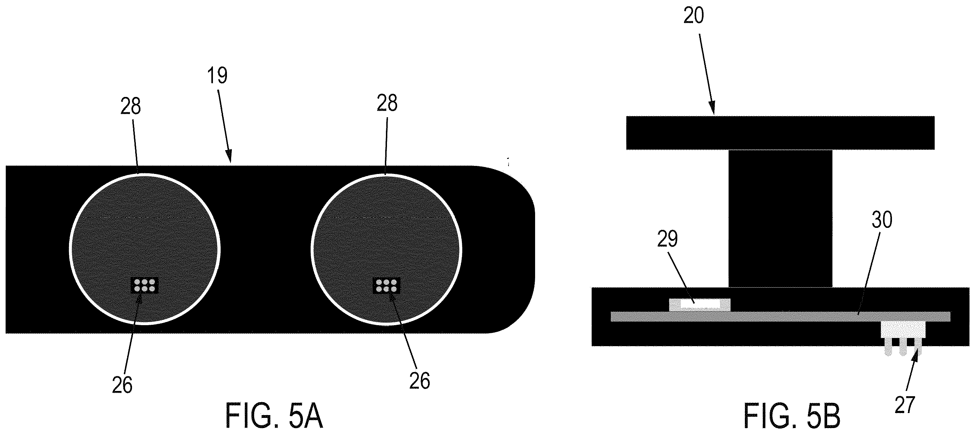

In den Figuren 5A und 5B sind Details der Objektaufnahme 19 und der beiden Objekthalter 20 des 3D-Scanners 1 der Figuren 2 bis 4 veranschaulicht. Demnach weist die plattenförmig ausgebildete Objektaufnahme 19 jeweils einen Gegenstecker 26 für einen Stecker 27 der Objekthalter 20 an der hierfür vorgesehenen Objekthalter-Position 28 auf. Wenn ein Objekthalter 20 in eine Objekthalter-Position 28 auf die Objektaufnahme 19 gesetzt wird, gelangen die Stifte des Steckers 27, die an der Unterseite des Objekthalters 20 vorstehen, in elektrischen Kontakt mit den Stiftaufnahmen des Gegensteckers 26, sodass eine elektrische Steckverbindung hergestellt wird. Die Gegenstecker 26 sind mit der Steuereinheit 2 des 3D-Scanners 1 datentechnisch verbunden. Die Objekthalter 20 sind jeweils mit einem Speicherbaustein 29 (z.B. EEPROM) versehen, in dem Daten über den Objekthalter 20 permanent gespeichert sind. Der Speicherbaustein 29 ist mit dem Stecker 27 über eine Datenleitung 30 datentechnisch verbunden.

Falls eine elektrische Verbindung zwischen dem Stecker 27 eines Objekthalters 20 und dem zugehörigen Gegenstecker 26 hergestellt ist, können im Speicherbaustein 29 gespeicherte Daten an die Steuereinheit 2 des 3D-Scanners 1 übertragen werden, wobei eine Datenübertragung vorteilhaft schon unmittelbar mit Kontaktherstellung in automatischer Weise startet. Hierdurch ist in vorteilhafter Weise eine automatische Erkennung des jeweiligen Objekthalters 20 durch Speicherung einer Codierung für den Objekthalter 20 möglich, wobei vorzugsweise auch spezifische Kalibrationsdaten des Objekthalters 20 übertragen werden, was insbesondere eine rechnerisch ermittelte Okklusion von Ober- und Unterkiefer ermöglicht. Möglich ist somit die automatische Erkennung unterschiedlicher Objekthalter 20, nebst zugehöriger Daten des Objekthalters 20. Insbesondere kann hierdurch auch ein automatischer Scan-Vorgang gestartet werden. Die Arbeit mit dem 3D-Scanner 1 kann hierdurch erheblich vereinfacht werden.

Es wird nun Bezug auf Figur 6 genommen, worin anhand eines Zeit-Ort-Diagramm ein Ausführungsbeispiel zur optischen Abtastung im 3D-Scanner 1 veranschaulicht ist. In Figur 7 sind für das Zeit-Ort-Diagramm von Figur 6 mit Belichtungs- und Auslesezeiten des Bildsensors 9 angegeben. Im oberen Teil der Figuren 6 und 7 ist von links nach rechts eine zeitliche Abfolge von projizierten Bildern dargestellt, die von der Projektionseinheit 4 auf die Oberfläche eines Objekts projiziert werden. Die Bilder dienen zur Projektion verschiedener Streifenlichtmuster zur optischen zweidimensionalen Abtastung der Oberfläche des Objekts zur Ermittlung eines digitalen 3D-Abbilds des Objekts. Im unteren Teil von Figur 6 sind die Pixelzeilen 11 mit Pixeln 10 des Bildsensors 9 veranschaulicht. Im unteren Teil von Figur 7 sind die Belichtungs- und Auslesezeiten der Pixelzeilen 11 angegeben. Die Darstellung von links nach rechts entspricht dem zeitlichen Ablauf.

Wie schon in Figur 1 dargestellt, umfasst der Bildsensor 9 eine Vielzahl von Pixeln 10, die in Pixelzeilen 11 angeordnet sind. In der schematischen Darstellung von Figur 6 sind fünf Pixel 10 pro Pixelzeile 11 und neun Pixelzeilen 11 dargestellt. Wie in Figur 7 angegeben, umfasst der Bildsensor 9 in der Realität z.B. 3120 Pixelzeilen, in denen jeweils eine Vielzahl von Pixeln enthalten sind.

In diesem Ausführungsbeispiel ist angenommen, dass die Projektionseinheit 4 aufeinanderfolgende Bilder mit einer Bildfrequenz (Bildwechselfrequenz) von 50 fps projiziert. Weiterhin ist angenommen, dass die Kamera Bilder mit einer (maximalen) Bildfrequenz von 25 fps aufnehmen kann. Eine Bildfrequenz von 50 fps entspricht 50 Bilder pro Sekunde, d.h. jedes Bild wird von der Projektionseinheit für eine Dauer von 20 ms (Millisekunden) auf die Oberfläche des Objekts projiziert. Mithin beträgt die Bildfrequenz der Projektionseinheit 4 das Doppelte der Bildfrequenz der Kamera 5.

Die Pixelzeilen 11 des Bildsensors 9 werden im Rolling-Shutter-Modus zeitlich gestaffelt belichtet und zeilenweise ausgelesen, wobei mit der Belichtung der ersten Pixelzeile 11 begonnen wird, gefolgt von einem späteren Beginn der Belichtung der unmittelbar folgenden zweiten Pixelzeile 11 und so fort, bis mit der Belichtung der letzten Pixelzeile 11 begonnen wird. Dies ist in Figur 6 schematisch dadurch veranschaulicht, dass jede Pixelzeile 11, die sich unterhalb einer anderen Pixelzeile 11 befindet um ein Pixel 10 nach rechts versetzt ist, entsprechend einem zeitlich späteren Beginn der Belichtung. Wird der Bildsensor 9 in senkrechter Blickrichtung betrachtet, ist die erste Pixelzeile 11 die oberste Pixelzeile, d.h. der Bildsensor 9 wird von oben nach unten zeilenweise belichtet, mit einem jeweils späteren Beginn der Belichtung einer unmittelbar darunterliegenden Pixelzeile 11. Die einmalige Belichtung aller Pixelzeilen entspricht einem Durchlauf.

In Einklang mit der Bildfrequenz der Projektionseinheit 4 beträgt die Belichtungszeit der Pixelzeilen 11 jeweils 20 ms, d.h. jede Pixelzeile 11 wird für eine Dauer von 20 ms belichtet. Dies kann in an sich bekannter Weise z.B. über einen elektronischen Verschluss gesteuert werden, was als fachbekannt vorausgesetzt werden darf. Die Auslesezeit einer Pixelzeile 11 beträgt hier beispielsweise 10 $\mu$m (Mikrosekunden). Die Belichtung jeder unmittelbar nachfolgenden Pixelzeile 11 wird hier beispielsweise um die Zeitdauer der Auslesezeit einer Pixelzeile 11 später begonnen, d.h. der Beginn der Belichtung zweier unmittelbar benachbarter Pixelzeilen 11 ist um 10 $\mu$s zeitlich getrennt. Bei einer Gesamtzahl von 3120 Pixelzeilen 11 folgt, dass die gesamte Auslesezeit aller Pixelzeilen 11 des Bildsensors 9 bei einem Durchlauf ca. 31 ms beträgt. Bei einer Belichtungszeit von 20 ms pro Pixelzeile 11 folgt hieraus, dass die einmalige Belichtung und Auslesung aller Pixelzeilen 11, d.h. ein einmaliger Durchlauf durch alle Pixelzeilen 11, eine Zeitspanne von 51 ms benötigt. Die Kamera hat eine maximale Bildfrequenz von 25 fps, entsprechend einer minimalen Zykluszeit pro Bild von 40 ms.

In Figur 7 sind Beginn und Dauer der Belichtung der jeweiligen Pixelzeilen 11 angegeben, wobei sich der Beginn der Belichtung einer unmittelbar folgenden Pixelzeile 11 um 10 $\mu$s verschiebt. Ersichtlich liegt eine zeitliche Überlagerung der Belichtung von Pixelzeilen 11 vor. Das Auslesen einer Pixelzeile 11 erfolgt unmittelbar nach dem Ende der Belichtung der Pixelzeile 11. Aus zeichnerischen Gründen ist die Auslesezeit von 10 $\mu$s einer Pixelzeile 11 im Vergleich zu deren Belichtungszeit von 20 ms stark vergrößert dargestellt.

Wie in den Figuren 6 und 7 erkennbar, werden für eine einmalige Belichtung aller Pixelzeilen 11 des Bildsensors 9 im Rolling-Shutter-Modus, d.h. pro Durchlauf, sequenziell drei (Einzel-)Bilder bzw. Frames von der Projektionseinheit 4 auf die Oberfläche des Objekts projiziert. Mit anderen Worten, die einmalige Belichtung aller Pixelzeilen 11 pro Durchlauf erfolgt durch einen Satz dreier Bilder. Ein Satz von Bildern besteht dementsprechend aus drei Bildern, die einer zeilenweisen Belichtung aller Pixelzeilen 11 des Bildsensors 9 bei einem Durchlauf dienen.

Die drei Bilder eines selben Satzes werden in einer Zeitspanne von 60 ms projiziert, während das Belichten und Auslesen aller Pixelzeilen 11 pro Durchlauf eine Zeitspanne von 51 ms in Anspruch nimmt. In dem dargestellten Ausführungsbeispiel ist der Beginn der Belichtung der ersten Pixelzeile 11 nicht mit dem Beginn der Projektion des ersten Bilds der drei Bilder eines selben Satzes synchronisiert, sondern erfolgt erst später, unter der Maßgabe, dass keine Pixelzeile 11, insbesondere nicht die mittlere Pixelzeile 11, mit zwei verschiedenen Streifenlichtmustern (Pattern) belichtet wird. Das Ende der Belichtung der letzten Pixelzeile ist zeitlich vor dem Ende der Projektion des dritten Bilds desselben Satzes. Dies ist möglich, da eine Zeitdifferenz von 9 ms zwischen der Projektion der drei Bilder eines selben Satzes und dem Belichten und Auslesen aller Pixelzeilen bei einem Durchlauf vorliegt.

Im Folgenden wird davon ausgegangen, dass die Zuordnung der Bilder zur Bildfläche des Bildsensors stets unverändert ist. Entsprechend der durch das Array 13 gegebenen Bildfläche des Bildsensors 9 sind die von der Projektionseinheit 4 projizierten Bilder jeweils in Form eines Rechtecks oder Quadrats ausgebildet. Jedes projizierte Bild weist eine erste Richtung (x') und eine hierzu senkrechte zweite Richtung (y') auf, wobei die erste Richtung (x') des projizierten Bilds der ersten Richtung (x) des Bildsensors 9 und die zweite Richtung (y') des projizierten Bilds der zweiten Richtung (x) des Bildsensors 9 zugeordnet ist. Wie eingangs bereits dargestellt, ist jedes projizierte Bild der Bildfläche des Bildsensors 9 eineindeutig (d.h. 1:1) zugeordnet.

Eine zeitlich gestaffelte Belichtung der Pixelzeilen 11 entlang der zweiten Richtung (y) des Bildsensors 9 erfolgt durch Licht, das von jeweiligen zeilenförmigen Bildbereichen eines projizierten Bilds reflektiert wird, die entlang der zweiten Richtung (y') des Bilds angeordnet sind.

Die Bilder weisen eine stets gleiche Bildabmessung SF entlang der zweiten Richtung (y') auf, wobei sich die Bildabmessung SF, ausgehend von einem ersten Bildrand zu einem zweiten Bildrand entlang der zweiten Richtung (y') bemisst. Bei senkrechter Blickrichtung kann der erste Bildrand als oberer Rand, der zweite Bildrand als unterer Bildrand verstanden werden. Die Bildabmessung SF bemisst sich in einer Richtung, die dem zeilenweisen Auslesen der Pixelzeilen 11 zugeordnet ist. In entsprechender Weise weisen, in einer Richtung, die dem zeilenweisen Auslesen der Pixelzeilen 11 zugeordnet ist, Bildbereiche eines Bilds eine Bildbereichsabmessung SR und Lichtmuster eine Lichtmusterabmessung SP auf. In der hierzu senkrechten Richtung (x'), d.h. in Richtung der Pixelzeilen 11, sind die Abmessungen der Lichtmuster jeweils so gewählt, dass alle Pixel 10 einer selben Pixelzeile 11 belichtet werden.

Den Pixelzeilen 11 des Bildsensors 9 sind in analoger Weise zeilenförmige Bereiche der Bilder 1:1 zugeordnet. Pro Durchlauf werden die Pixel 10 des Bildsensors 9 nur mit einem einzigen Streifenlichtmuster belichtet. Hierbei wird Nutzen aus der Tatsache gezogen, dass der Beginn der Belichtung der Pixelzeilen 11 zeitlich gestaffelt erfolgt. Das Streifenlichtmuster wird entsprechend dem zeitlich versetzten Beginn des Belichtens der Pixelzeilen 11 in verschiedene Bereiche der drei Bilder eines Satzes projiziert. Dies wird in Verbindung mit den Figuren 6 und 7 anhand von drei verschiedenen Streifenlichtmustern, die mit "Pattern 1", "Pattern 2" und "Pattern 3" bezeichnet sind, näher erläutert.

Pattern 1 sind drei Bilder 1A, 1B, 1C zugeordnet, die gemeinsam einen ersten Satz von Bildern bilden. Die drei Bilder 1A, 1B, 1C dienen zur Belichtung aller Pixelzeilen 11 des Bildsensors 9 mit dem Pattern 1 in einem Durchlauf. Pattern 2 sind die drei Bilder 2A, 2B, 2C zugeordnet, die gemeinsam einen zweiten Satz von Bildern bilden. Die drei Bilder 2A, 2B, 2C dienen zur Belichtung aller Pixelzeilen 11 des Bildsensors 9 mit dem Pattern 2 in einem weiteren (unmittelbar nachfolgenden) Durchlauf. Bild 2A ist identisch zu Bild 1C, d.h. Bild 1C gehört sowohl dem ersten Satz als auch dem zweiten Satz an. Pattern 3 sind die drei Bilder 3A, 3B, 3C zugeordnet, die gemeinsam einen dritten Satz von Bildern bilden. Die drei Bilder 3A, 3B, 3C dienen zur Belichtung aller Pixelzeilen 11 des Bildsensors 9 mit dem Pattern 3 in einem weiteren (unmittelbar nachfolgenden) Durchlauf. Bild 2C ist identisch zu Bild 3A, d.h. Bild 2C gehört sowohl dem zweiten Satz als auch dem dritten Satz an. Generell gilt, dass mit Ausnahme der jeweils zweiten (mittleren) Bilder eines Satzes, ein Bild auch dem unmittelbar benachbarten Satz angehört, es sei denn, der Satz ist zeitlich randständig, d.h. die Bilder gehören zum ersten Satz oder letzten Satz von Bildern, die projiziert werden.

In den Figuren 6 und 7 sind der Einfachheit halber drei verschiedene Streifenlichtmuster dargestellt, nämlich ein zeitlich innenliegendes Streifenlichtmuster (Pattern 2) und zwei zeitlich randständige Streifenlichtmuster (Pattern 1, Pattern 3). Möglich ist, dass mehr als drei Streifenlichtmuster projiziert werden sollen, wobei sich in diesem Fall die Anzahl der zeitlich innenliegenden Streifenlichtmuster erhöht.

Im Weiteren wird die Ausgestaltung der projizierten Bilder zur Belichtung des Bildsensors 9 mit Pattern 1, Pattern 2 und Pattern 3 näher erläutert, wobei insbesondere Bezug genommen wird auf die Bildabmessung SF, Bildbereichsabmessung SR und Lichtmusterabmessung SP, jeweils bemessen in einer Richtung, die dem zeilenweisen Auslesen der Pixelzeilen 11 zugeordnet ist.

Allgemein gilt, dass pro Durchlauf ein Satz aus drei Bildern auf die Oberfläche des Objekts projiziert wird, wobei die Lichtmuster so projiziert werden, dass für die Lichtmusterabmessung SP gilt: SP ≥ SF $*$ 1/2, d.h. die Lichtmusterabmessung SP ist mindestens halb so groß wie die Bildabmessung SF. In jedes Bild eines jeweiligen Satzes wird ein Lichtmuster so projiziert, dass ein Bildbereich mit der Bildbereichsabmessung SR überdeckt wird, wobei gilt SR = SF $*$ 1/2. Hierbei wird der Bildbereich in jedem nachfolgenden Bild eines jeweiligen Satzes um SF $*$ 1/4 entlang der Richtung, die dem zeilenweisen Auslesen der Pixelzeilen zugeordnet ist, versetzt. Weiterhin wird in mindestens einem Satz im dritten Bild ein weiteres Lichtmuster, das zu einem (unmittelbar) nachfolgenden Durchlauf gehört, projiziert. Das weitere Lichtmuster zwischen dem einen Lichtmuster und dem ersten (z.B. oberen) Bildrand projiziert.

Jeder Satz umfasst drei Bilder. Der erste Satz umfasst die Bilder 1A, 1B, 1C, der zweite Satz die Bilder 2A, 2B, 2C und der dritte Satz die Bilder 3A, 3B, 3C. Für jedes Bild ist ein Bildbereich definiert, der in jedem nachfolgenden Bild eines jeweiligen Satzes um SF $*$ 1/4, d.h. ein Viertel der Bildabmessung entlang der Richtung, die dem zeilenweisen Auslesen der Pixelzeilen zugeordnet ist, versetzt wird. In Figur 6 ist auf der linken Seite der Bilder angegeben, wie sich der Bildbereich in einem jeweiligen Satz verschiebt. Die Bildbereichsabmessung SR der drei Bilder eines Satzes ist mit SR1 für das erste Bild, SR2 für das zweite Bild und SR3 für das dritte Bild angegeben. In Figur 6 sind auf der rechten Seite der Bilder die Bildabmessung SF und beispielhaft für das Bild 3C die Lichtmusterabmessung SP.

Belichtung der Pixelzeilen 11 mit Pattern 1:

Auf die erste bzw. obere Hälfte von Bild 1A wird, entsprechend dem Bildbereich mit der Bildbereichsabmessung SR1, Pattern 1 projiziert. In die zweite bzw. untere Hälfte von Bild 1A erfolgt vorzugsweise keine Projektion eines Streifenlichtmusters. Die Bildbereichsabmessung SR (hier SR1) entspricht der Lichtbereichsabmessung SP. In Bild 1B wird Pattern 1 vollflächig projiziert, d.h. Pattern 1 erstreckt sich über das komplette Bild 1B. Mithin ist die Lichtmusterabmessung SP größer als die Bildbereichsabmessung SR (hier SR2). Wesentlich ist, dass Pattern 1 in den mittleren Bildbereich von Bild 1B, wie durch die Bildbereichsabmessung SR2 angegeben, projiziert wird. Demnach könnte Pattern 1 alternativ auch nur in diesem Bildbereich projiziert werden, wobei am oberen und/oder unteren Bildrand von Bild 1B bis zu einem Viertel der Fläche frei von der Projektion von Pattern 1 sein kann. Der Bildsensor 9 wird somit bis zur mittleren Pixelzeile 11 mit Pattern 1 von Bild 1A und 1B zeitlich gestaffelt belichtet und zeilenweise ausgelesen. Die mittlere Pixelzeile 11 wird nur mit Pattern 1 von Bild 1B belichtet. Auf die erste bzw. obere Hälfte von Bild 1C wird Pattern 2 projiziert, während auf die zweite bzw. untere Hälfte von Bild 1C Pattern 1 projiziert wird. Somit wird die untere Hälfte des Bildsensors 9 mit Pattern 1 von Bild 1B und 1C zeitlich gestaffelt belichtet und zeilenweise ausgelesen. Zudem wird die obere Hälfte des Bildsensors 9 mit Pattern 2 von Bild 1C zeitlich gestaffelt belichtet.

Belichtung der Pixelzeilen mit Pattern 2:

Auf die erste bzw. obere Hälfte von Bild 2A wird, entsprechend dem Bildbereich mit der Bildbereichsabmessung SR1, Pattern 2 projiziert. Für Pattern 2 entspricht die Bildbereichsabmessung SR (hier SR1) der Lichtbereichsabmessung SP. In die zweite bzw. untere Hälfte von Bild 2A erfolgt die Projektion von Pattern 1. Für Pattern 1 entspricht die Bildbereichsabmessung SR (hier SR3) der Lichtbereichsabmessung SP. In Bild 2B wird Pattern 2 vollflächig projiziert, d.h. Pattern 2 erstreckt sich über das komplette Bild 2B. Die Lichtmusterabmessung SP ist größer als die Bildbereichsabmessung SR (hier SR2). Wesentlich ist, dass Pattern 2 in den mittleren Bildbereich von Bild 2B, wie durch die Bildbereichsabmessung SR2 angegeben, projiziert wird. Demnach könnte Pattern 2 alternativ auch nur in diesem Bildbereich projiziert werden, wobei am oberen und/oder unteren Bildrand von Bild 2B bis zu einem Viertel der Fläche frei von der Projektion von Pattern 2 sein kann. Der Bildsensor 9 wird somit bis zur mittleren Pixelzeile 11 mit Pattern 2 von Bild 2A und 2B zeitlich gestaffelt belichtet und zeilenweise ausgelesen. Die mittlere Pixelzeile 11 wird nur mit Pattern 2 von Bild 2B belichtet. Auf die erste bzw. obere Hälfte von Bild 2C wird Pattern 3 projiziert, während auf die zweite bzw. untere Hälfte von Bild 2C Pattern 2 projiziert wird. Somit wird die untere Hälfte des Bildsensors 9 mit Pattern 2 von Bild 2B und 2C zeitlich gestaffelt belichtet und zeilenweise ausgelesen. Zudem wird die obere Hälfte des Bildsensors 9 mit Pattern 3 von Bild 2C zeitlich gestaffelt belichtet.

Belichtung der Pixelzeilen mit Pattern 3:

Auf die erste bzw. obere Hälfte von Bild 3A wird, entsprechend dem Bildbereich mit der Bildbereichsabmessung SR1, Pattern 3 projiziert. Für Pattern 3 entspricht die Bildbereichsabmessung SR (hier SR1) der Lichtbereichsabmessung SP. In die zweite bzw. untere Hälfte von Bild 3A erfolgt die Projektion von Pattern 2. Für Pattern 2 entspricht die Bildbereichsabmessung SR (hier SR3) der Lichtbereichsabmessung SP. In Bild 3B wird Pattern 3 vollflächig projiziert, d.h. Pattern 3 erstreckt sich über das komplette Bild 3B. Die Lichtmusterabmessung SP ist größer als die Bildbereichsabmessung SR (hier SR2). Wesentlich ist, dass Pattern 3 in den mittleren Bildbereich von Bild 3B, wie durch die Bildbereichsabmessung SR2 angegeben, projiziert wird. Demnach könnte Pattern 3 alternativ auch nur in diesen Bildbereich projiziert werden, wobei am oberen und/oder unteren Bildrand von Bild 3B bis zu einem Viertel der Fläche frei von der Projektion von Pattern 2 sein kann. Der Bildsensor 9 wird somit bis zur mittleren Pixelzeile 11 mit Pattern 3 von Bild 3A und 3B zeitlich gestaffelt belichtet und zeilenweise ausgelesen. Die mittlere Pixelzeile 11 wird nur mit Pattern 3 von Bild 3B belichtet. Auf die zweite bzw. untere Hälfte von Bild 3C wird Pattern 3 projiziert, während in die erste bzw. obere Hälfte von Bild 2C kein Lichtmuster projiziert wird. Somit wird die untere Hälfte des Bildsensors 9 mit Pattern 3 von Bild 3B und 3C zeitlich gestaffelt belichtet und zeilenweise ausgelesen.

Falls mehr als drei Streifenlichtmuster (Pattern) vorgesehen sind, wobei die Pixelzeilen während eines Durchlaufs stets mit einem selben Streifenlichtmuster belichtet werden, wird der zweite Satz von Bildern (welcher zeitlich innenliegend ist) ein- oder mehrfach wiederholt. Die beiden zeitlich randständigen Sätze von Bildern sind unverändert.

Durch das Projizieren von zwei Lichtmustern in einem Bild kann vorteilhafter Weise eine wesentlich schnellere Bildaufnahme durch die Kamera erfolgen, um deren maximale Bildfrequenz besser auszunutzen. Dies ist ein großer Vorteil des 3D-Scanners, da digitale 3D-Darstellungen von Objekten sehr schnell erzeugt werden können.

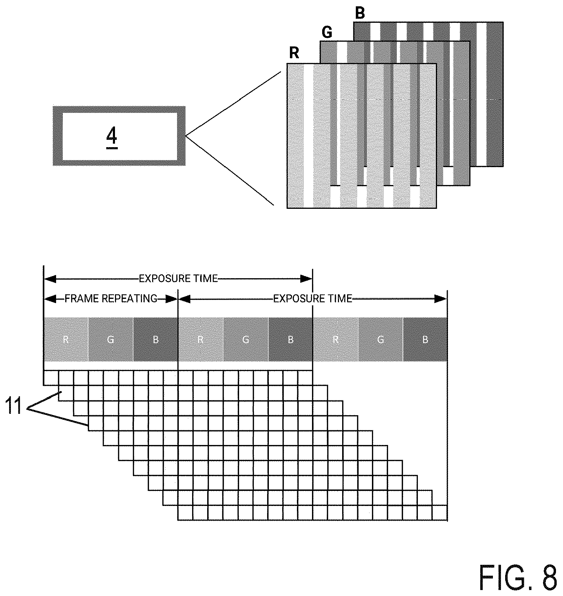

In Figur 8 ist anhand eines Zeit-Ort-Diagramms eine schematische Darstellung eines Ausführungsbeispiels für die optische Abtastung in dem erfindungsgemäßen 3D-Scanner 1 veranschaulicht. Die Projektionseinheit 4 projiziert für den Eindruck eines weißen Bilds ein rotes Bild, grünes Bild und eine blaues Bild zeitlich nacheinander, was mit den drei Bildern R, G, B veranschaulicht ist. Dies hat den sogenannten "Rainbow-Effekt" zur Folge, da die Farben nicht gleichzeitig auf dem Objekt ankommen. Da die Kameras 5 im Rolling Shutter-Modus die einzelnen Pixelzeilen 11 nur zeitlich versetzt auslesen können, wird ein Rainbow-Effekt erzeugt, da unterschiedliche Pixelzeilen 11 unterschiedliche Teile des roten, grünen und blauen Bilds aufnehmen.

Um dieses Problem zu lösen, werden die Projektionseinheit 4 und die eine oder mehreren Kameras 5 synchronisiert, wobei die Belichtungszeit des Bildsensors 4 so eingestellt ist, dass sie ein genaues Vielfaches des RGB-Zyklus der Projektionseinheit 4 ist. Durch das genaue Timing bekommt jede Pixelzeile 11 die gleiche Belichtungszeit von der roten, grünen und blauen Bildern, sodass eine farbechte Aufnahme ohne Farbverfälschungen ermöglicht ist.

Aus obigen Ausführungen ergibt sich, dass die Erfindung einen verbesserten 3D-Scanner bereitstellt, mit dem digitale 3D-Darstellungen von Objekten zeiteffizient und mit hoher Bildqualität erzeugt werden können.

Bezugszeichenliste

| | |
|---|---|
| 1 | 3D-Scanner |
| 2 | Steuereinheit |
| 3 | Scan-Einheit |
| 4 | Projektionseinheit |
| 5 | Kamera |
| 6, 6' | Lichtstrahl |
| 7 | Oberfläche |
| 8 | Objekt |
| 9 | Bildsensor |
| 10 | Pixel |
| 11 | Pixelzeile |
| 12 | Pixelreihe |
| 13 | Array |
| 14 | Grundgehäuse |
| 15 | Innenbereich |
| 16 | Bodenabschnitt |
| 17 | Deckabschnitt |
| 18 | Rückwand |
| 19 | Objektaufnahme |
| 20 | Objekthalter |
| 21 | Teller |
| 22 | Dentalobjekt |
| 23 | Computer |
| 24 | Artikulator |
| 25 | Kiefermodell |
| 26 | Gegenstecker |
| 27 | Stecker |
| 28 | Objekthalter-Position |
| 29 | Speicherbaustein |
| 30 | Datenleitung |

**Patentansprüche**

1. 3D-Scanner (1) zur optischen Abtastung der Oberfläche (7) eines Objekts (8), mit mindestens einer Scan-Einheit (3), welche eine Projektionseinheit (4) zur Projektion von Lichtmustern enthaltenden Bildern auf das Objekt (8) und mindestens eine Kamera (5) zur Aufnahme der Bilder aufweist, wobei eine Bildfrequenz der Projektionseinheit (4) dem N-fachen einer Bildfrequenz der mindestens einen Kamera (5) entspricht, wobei N eine natürliche Zahl größer 1 ist, wobei jede Kamera (5) einen Bildsensor (9) mit einer Vielzahl von in einer Reihe angeordneten Pixelzeilen (11) aufweist, wobei die Pixelzeilen (11) in jeweiligen Durchläufen der Reihe nach zeitlich gestaffelt belichtet und zeilenweise ausgelesen werden, wobei in einer Richtung, die dem zeilenweisen Auslesen der Pixelzeilen (11) zugeordnet ist, Bilder eine Bildabmessung SF, Bildbereiche eine Bildbereichsabmessung SR und Lichtmuster eine Lichtmusterabmessung SP aufweisen, sowie einer Steuereinheit (2) zur Steuerung der mindestens einen Scan-Einheit (3), **dadurch gekennzeichnet, dass** die Steuereinheit (2) so konfiguriert ist, dass

   - pro Durchlauf ein Satz aus $N_+1$ Bildern (1A, 1B, 1C; 2A, 2B, 2C; 3A, 3B, 3C) auf die Oberfläche (7) des Objekts (8) projiziert wird, wobei die Lichtmuster so projiziert werden, dass für die Lichtmusterabmessung SP gilt: $SP \geq SF * 2/(N_+2)$,
   - wobei in jedes Bild (1A, 1B, 1C; 2A, 2B, 2C; 3A, 3B, 3C) eines jeweiligen Satzes ein Lichtmuster so projiziert wird, dass ein Bildbereich mit der Bildbereichsabmessung SR überdeckt wird, wobei gilt $SR = SF * 2/(N_+2)$, wobei der Bildbereich in jedem nachfolgenden Bild (1B, 1C; 2B, 2C; 3B, 3C) eines jeweiligen Satzes um $SF * 1/(N_+2)$ entlang der Richtung, die dem zeilenweisen Auslesen der Pixelzeilen zugeordnet ist, versetzt wird, und
   - wobei in mindestens einem Satz (1A, 1B, 1C; 2A, 2B, 2C), in einem bis maximal N-1 aufeinander folgenden Bildern (1C, 2C), endend mit dem $(N_+1')$ten Bild, jeweils ein oder mehrere weitere Lichtmuster, die zu nachfolgenden Durchläufen gehören, projiziert werden.

2. 3D-Scanner (1) nach Anspruch 1, bei welchem in den $N_+1$ Bildern (1A, 1B, 1C; 2A, 2B, 2C; 3A, 3B, 3C) eines jeweiligen Durchlaufs die Lichtmuster so projiziert werden, dass für die Lichtmusterabmessung SP gilt: $SP = SF * 2/(N_+2)$.

3. 3D-Scanner (1) nach einem der Ansprüche 1 oder 2, bei welchem
in der mindestens einen Scan-Einheit (2) die Bildfrequenz der Projektionseinheit (4) dem 2-fachen der Bildfrequenz der mindestens einen Kamera (5) entspricht, wobei

   - pro Durchlauf ein Satz aus drei Bildern (1A, 1B, 1C; 2A, 2B, 2C; 3A, 3B, 3C) auf die Oberfläche (7) des Objekts (8) projiziert wird, wobei die Lichtmuster so projiziert werden, dass für die Lichtmusterabmessung SP gilt: $SP \geq SF * 1/2$,
   - wobei in jedes Bild (1A, 1B, 1C; 2A, 2B, 2C; 3A, 3B, 3C) eines jeweiligen Satzes ein Lichtmuster so projiziert wird, dass ein Bildbereich mit der Bildbereichsabmessung SR überdeckt wird, wobei gilt $SR = SF * 1/2$, wobei der Bildbereich in jedem nachfolgenden Bild (1B, 1C; 2B, 2C; 3B, 3C) eines jeweiligen Satzes um $SF * 1/4$ entlang der Richtung, die dem zeilenweisen Auslesen der Pixelzeilen zugeordnet ist, versetzt wird, und
   - wobei in mindestens einem Satz (1A, 1B, 1C; 2A, 2B, 2C), im dritten Bild ein weiteres Lichtmuster, das zu einem nachfolgenden Durchlauf gehört, projiziert wird.

4. 3D-Scanner (1) nach Anspruch 3, bei welchem pro Durchlauf ein Satz aus 3 Bildern (1A, 1B, 1C; 2A, 2B, 2C; 3A, 3B, 3C) auf die Oberfläche (7) des Objekts (8) projiziert wird, wobei die Lichtmuster so projiziert werden, dass für die Lichtmusterabmessung SP gilt: $SP = SF * 1/2$.

5. 3D-Scanner nach Anspruch 3, bei welchem in jedem zweiten Bild (1B, 2B, 2C) die Lichtmusterabmessung SP und die Bildabmessung SF gleich sind.

6. 3D-Scanner nach einem der Ansprüche 3 bis 5, bei welchem bei einem ersten Durchlauf ein Lichtmuster mit einer Lichtmusterabmessung SP, wobei gilt $SP = SF * 1/2$, in eine erste Hälfte des ersten Bilds (1A) projiziert wird, während in eine zweite Hälfte des ersten Bilds (1A) kein Lichtmuster projiziert wird, wobei die Aufteilung in das erste Bild und das zweite Bild auf die Richtung bezogen ist, die dem zeilenweisen Auslesen der Pixelzeilen (11) zugeordnet ist.

7. 3D-Scanner nach einem der Ansprüche 3 bis 6, bei welchem bei einem letzten Durchlauf ein Lichtmuster mit einer Lichtmusterabmessung SP, wobei gilt $SP = SF * 1/2$, in eine zweite Hälfte des ersten Bilds (3C) projiziert wird, während in eine erste Hälfte des ersten Bilds (1A) kein Lichtmuster projiziert wird, wobei die Aufteilung in das erste Bild und das zweite Bild auf die Richtung bezogen ist, die dem zeilenweisen Auslesen der Pixelzeilen (11) zugeordnet ist.

8. 3D-Scanner nach einem der Ansprüche 3 bis 7, bei welchem bei einem jeweiligen Durchlauf eine mittlere Pixelzeile (11) des Bildsensors (9) nur mit dem zweiten Bild (1B, 2B, 3B) belichtet wird.

**9.** 3D-Scanner nach einem der Ansprüche 1 bis 8, welcher eine Objektaufnahme (19) mit zwei oder mehr Objekthaltern (20) aufweist, wobei jeder Objekthalter (20) zur Platzierung eines Objekts (8) dient.

**10.** 3D-Scanner nach Anspruch 9, bei welchem die Objekthalter (20) jeweils um eine oder mehrere Rotationsachsen rotierbar sind.

**11.** 3D-Scanner nach Anspruch 9 oder 10, bei welchem die Steuereinheit (2) so konfiguriert ist, dass die Oberflächen von zwei oder mehr Objekten (8) simultan optisch abgetastet werden.

**12.** 3D-Scanner nach einem der Ansprüche 9 bis 11, bei welchem die Objekthalter (20) jeweils über einen Speicherbaustein (29) mit gespeicherten Daten über den Objekthalter (20) verfügen, wobei bei einem auf der Objektaufnahme (19) angeordneten Objekthalter (20) der Speicherbaustein (2) datentechnisch mit der Steuereinheit (2) verbunden ist, wobei die Steuereinheit (2) so konfiguriert ist, dass die Daten des Speicherbausteins (29) ausgelesen werden.

**13.** 3D-Scanner nach einem der Ansprüche 1 bis 12, bei welchem die Projektionseinheit (4) und die mindestens eine Kamera (5) so synchronisiert sind, dass eine Belichtungszeit des Bildsensors (4) einem Vielfachen eines RGB-Zyklus der Projektionseinheit (4) entspricht.

**14.** 3D-Scanner nach einem der Ansprüche 1 bis 13, welcher in Form eines Desktop-Scanners für die Dentaltechnik ausgebildet ist.

**Claims**

**1.** 3D scanner (1) for optically scanning the surface (7) of an object (8), comprising at least one scanning unit (3) which has a projection unit (4) for projecting images containing light patterns onto the object (8) and at least one camera (5) for recording the images, wherein an image frequency of the projection unit (4) corresponds to N times an image frequency of the at least one camera (5), wherein N is a natural number greater than 1, wherein each camera (5) has an image sensor (9) with a plurality of lines of pixels (11) arranged in a row, wherein the pixel lines (11) are exposed in respective passes in sequence in a time-delayed manner and read out line-by-line, wherein, in a direction associated with the line-by-line readout of the pixel lines (11), images have an image dimension SF, image areas have an image area dimension SR, and light patterns have a light pattern dimension SP, and a control unit (2) for controlling the at least one scanning unit (3),

**characterized in that** the control unit (2) is configured such that

- per run, a set of N+1 images (1A, 1B, 1C; 2A, 2B, 2C; 3A, 3B, 3C) is projected onto the surface (7) of the object (8), wherein the light patterns are projected such that the following applies to the light pattern dimension SP: SP $\geq$ SF $*$ 2/(N+2),
- wherein a light pattern is projected into each image (1A, 1B, 1C; 2A, 2B, 2C; 3A, 3B, 3C) of a respective set in such a way that an image area with the image area dimension SR is covered, wherein SR = SF $*$ 2/(N+2), wherein the image area in each subsequent image (1B, 1C; 2B, 2C; 3B, 3C) of a respective set is offset by SF $*$ 1/(N+2) along the direction associated with the line-by-line readout of the pixel lines, and
- wherein in at least one set (1A, 1B, 1C; 2A, 2B, 2C), in one to a maximum of N-1 successive images (1C, 2C), ending with the (N+1')th image, one or more further light patterns belonging to subsequent runs are respectively projected.

**2.** 3D scanner (1) according to claim 1, in which the light patterns are projected in the N+1 images (1A, 1B, 1C; 2A, 2B, 2C; 3A, 3B, 3C) of a respective run such that the following applies to the light pattern dimension SP: SP = SF $*$ 2/(N+2).

**3.** 3D scanner (1) according to one of claims 1 or 2, wherein in the at least one scanning unit (2), the frame rate of the projection unit (4) corresponds to twice the frame rate of the at least one camera (5), wherein

- per run, a set of three images (1A, 1B, 1C; 2A, 2B, 2C; 3A, 3B, 3C) is projected onto the surface (7) of the object (8), wherein the light patterns are projected such that the following applies to the light pattern dimension SP: SP $\geq$ SF $*$ 1/2,
- wherein a light pattern is projected into each image (1A, 1B, 1C; 2A, 2B, 2C; 3A, 3B, 3C) of a respective set such that an image area with the image area dimension SR is covered, where SR = SF $*$ 1/2, wherein the image area in each subsequent image (1B, 1C; 2B, 2C; 3B, 3C) of a respective set is shifted by SF $*$ 1/4 along the direction associated with the line-by-line readout of the pixel lines, and
- wherein in at least one set (1A, 1B, 1C; 2A, 2B, 2C), a further light pattern belonging to a subsequent run is projected in the third image.

**4.** 3D scanner (1) according to claim 3, in which one set of three images (1A, 1B, 1C; 2A, 2B, 2C; 3A, 3B, 3C) is projected onto the surface (7) of the object (8) per run, wherein the light patterns are projected such that the following applies to the light pattern dimension SP:

$$SP = SF * 1/2.$$

**5.** 3D scanner according to claim 3, wherein in every second image (1B, 2B, 2C) the light pattern dimension SP and the image dimension SF are equal.

**6.** 3D scanner according to one of claims 3 to 5, wherein, in a first run, a light pattern with a light pattern dimension SP, where SP = SF * 1/2, is projected into a first half of the first image (1A), while no light pattern is projected into a second half of the first image (1A), wherein the division into the first image and the second image is related to the direction associated with the line-by-line readout of the pixel lines (11).

**7.** 3D scanner according to any one of claims 3 to 6, wherein, in a last run, a light pattern with a light pattern dimension SP, where SP = SF * 1/2, is projected into a second half of the first image (3C), while no light pattern is projected into a first half of the first image (1A), wherein the division into the first image and the second image is related to the direction associated with the line-by-line readout of the pixel lines (11).

**8.** 3D scanner according to one of claims 3 to 7, in which, in a respective run, a middle pixel line (11) of the image sensor (9) is exposed only with the second image (1B, 2B, 3B).

**9.** 3D scanner according to one of claims 1 to 8, which has an object holder (19) with two or more object holders (20), each object holder (20) serving to place an object (8).

**10.** 3D scanner according to claim 9, wherein the object holders (20) are each rotatable about one or more axes of rotation.

**11.** 3D scanner according to claim 9 or 10, wherein the control unit (2) is configured such that the surfaces of two or more objects (8) are optically scanned simultaneously.

**12.** 3D scanner according to any of claims 9 to 11, wherein the object holders (20) each have a memory module (29) with stored data about the object holder (20), wherein, in the case of an object holder (20) arranged on the object support (19), the memory module (2) is connected to the control unit (2) in terms of data technology, wherein the control unit (2) is configured such that the data of the memory module (29) is read out.

**13.** 3D scanner according to one of claims 1 to 12, wherein the projection unit (4) and the at least one camera (5) are synchronized such that an exposure time of the image sensor (4) corresponds to a multiple of an RGB cycle of the projection unit (4).

**14.** 3D scanner according to one of claims 1 to 13, which is designed in the form of a desktop scanner for dental technology.

**Revendications**

**1.** Scanner 3D (1) pour balayer optiquement la surface (7) d'un objet (8), comprenant au moins une unité de balayage (3) qui comporte une unité de projection (4) pour projeter des images contenant des motifs lumineux sur l'objet (8) et au moins une caméra (5) pour enregistrer les images, dans lequel une fréquence d'image de l'unité de projection (4) correspond à N fois une fréquence d'image de la au moins une caméra (5), où N est un nombre naturel supérieur à 1, dans lequel chaque caméra (5) comporte un capteur d'images (9) avec une pluralité de lignes de pixels (11) disposées en une rangée, dans lequel les lignes de pixels (11) sont exposées dans des passages respectifs en séquence de manière temporellement décalée et lues ligne par ligne, dans lequel, dans une direction associée à la lecture ligne par ligne des lignes de pixels (11), les images ont une dimension d'image SF, les zones d'image ont une dimension de zone d'image SR et les motifs lumineux ont une dimension de motif lumineux SP, et une unité de commande (2) pour commander la au moins une unité de balayage (3),
**caractérisé en ce que** l'unité de commande (2) est configurée de telle sorte que

- par série, un ensemble de N+1 images (1A, 1B, 1C ; 2A, 2B, 2C ; 3A, 3B, 3C) est projeté sur la surface (7) de l'objet (8), les motifs lumineux étant projetés de telle sorte que la dimension SP des motifs lumineux satisfait à la relation suivante : SP ≥ SF * 2/(N+2),
- un motif lumineux est projeté dans chaque image (1A, 1B, 1C ; 2A, 2B, 2C ; 3A, 3B, 3C) d'un ensemble respectif de telle manière qu'une zone d'image ayant la dimension SR de la zone d'image soit couverte, où SR = SF * 2/(N+2), où la zone d'image dans chaque image suivante (1B, 1C ; 2B, 2C ; 3B, 3C) d'un ensemble respectif est décalée de SF * 1/(N+2) dans la direction associée à la lecture ligne par ligne des lignes de pixels, et
- dans lequel, dans au moins un ensemble (1A, 1B, 1C ; 2A, 2B, 2C), dans une à N-1 images successives (1C, 2C), se terminant par la (N+1') ème image, un ou plusieurs motifs lumineux supplémentaires appartenant à des séries suivantes sont respectivement projetés.

2. Scanner 3D (1) selon la revendication 1, dans lequel les motifs lumineux sont projetés dans les N+1 images (1A, 1B, 1C ; 2A, 2B, 2C ; 3A, 3B, 3C) d'une série respective de telle sorte que la dimension SP du motif lumineux est telle que : SP = SF $*$ 2/(N+2).

3. Scanner 3D (1) selon l'une des revendications 1 ou 2, dans lequel, dans au moins une unité de balayage (2), la fréquence d'images de l'unité de projection (4) correspond au double de la fréquence d'images de la caméra (5), dans lequel

   - par série, un ensemble de trois images (1A, 1B, 1C ; 2A, 2B, 2C ; 3A, 3B, 3C) est projeté sur la surface (7) de l'objet (8), les motifs lumineux étant projetés de telle sorte que la dimension SP du motif lumineux satisfait à la relation suivante : SP $\geq$ SF $*$ 1/2,
   - dans lequel un motif lumineux est projeté dans chaque image (1A, 1B, 1C ; 2A, 2B, 2C ; 3A, 3B, 3C) d'un ensemble respectif de telle sorte qu'une zone d'image ayant la dimension de zone d'image SR soit couverte, où SR = SF $*$ 1/2, dans lequel la zone d'image dans chaque image suivante (1B, 1C ; 2B, 2C ; 3B, 3C) d'un ensemble respectif est décalée de SF $*$ 1/4 dans la direction associée à la lecture ligne par ligne des lignes de pixels, et
   - dans lequel, dans au moins un ensemble (1A, 1B, 1C ; 2A, 2B, 2C), un autre motif lumineux appartenant à une série suivante est projeté dans la troisième image.

4. Scanner 3D (1) selon la revendication 3, dans lequel un ensemble de trois images (1A, 1B, 1C ; 2A, 2B, 2C ; 3A, 3B, 3C) est projeté sur la surface (7) de l'objet (8) par série, dans lequel les motifs lumineux sont projetés de telle sorte que la dimension SP du motif lumineux est telle que : SP = SF $*$ 1/2.

5. Scanner 3D selon la revendication 3, dans lequel, dans chaque deuxième image (1B, 2B, 2C), la dimension du motif lumineux SP et la dimension de l'image SF sont égales.

6. Scanner 3D selon l'une des revendications 3 à 5, dans lequel, lors d'un premier passage, un motif lumineux avec une dimension de motif lumineux SP, où SP = SF $*$ 1/2, est projeté dans une première moitié de la première image (1A), tandis qu'aucun motif lumineux n'est projeté dans une seconde moitié de la première image (1A), la division entre la première image et la seconde image étant liée à la direction associée à la lecture ligne par ligne des lignes de pixels (11).

7. Scanner 3D selon l'une quelconque des revendications 3 à 6, dans lequel, lors d'un dernier cycle, un motif lumineux ayant une dimension SP, où SP = SF $*$ 1/2, est projeté dans une deuxième moitié de la première image (3C), tandis qu'aucun motif lumineux n'est projeté dans une première moitié de la première image (1A), la division entre la première image et la deuxième image étant liée à la direction associée à la lecture ligne par ligne des lignes de pixels (11).

8. Scanner 3D selon l'une des revendications 3 à 7, dans lequel, lors d'un cycle respectif, une ligne de pixels centrale (11) du capteur d'image (9) est exposée uniquement avec la deuxième image (1B, 2B, 3B).

9. Scanner 3D selon l'une des revendications 1 à 8, qui comporte un support d'objet (19) avec deux ou plusieurs supports d'objet (20), chaque support d'objet (20) servant à placer un objet (8).

10. Scanner 3D selon la revendication 9, dans lequel les supports d'objet (20) sont chacun rotatifs autour d'un ou plusieurs axes de rotation.

11. Scanner 3D selon la revendication 9 ou 10, dans lequel l'unité de commande (2) est configurée de telle sorte que les surfaces de deux ou plusieurs objets (8) sont balayées optiquement simultanément.

12. Scanner 3D selon l'une quelconque des revendications 9 à 11, dans lequel les supports d'objet (20) comportent chacun un module de mémoire (29) avec des données enregistrées concernant le support d'objet (20), dans lequel, dans le cas d'un support d'objet (20) disposé sur le support d'objet (19), le module de mémoire (2) est relié à l'unité de commande (2) en termes de technologie des données, l'unité de commande (2) étant configurée de telle sorte que les données du module de mémoire (29) sont lues.

13. Scanner 3D selon l'une des revendications 1 à 12, dans lequel l'unité de projection (4) et la au moins une caméra (5) sont synchronisées de telle sorte qu'un temps d'exposition du capteur d'images (4) correspond à un multiple d'un cycle RVB de l'unité de projection (4).

14. Scanner 3D selon l'une des revendications 1 à 13, qui est conçu sous la forme d'un scanner de bureau pour la technologie dentaire.

FIG. 1

1

17

14

18

4,5    4,5

3    3

15

21    21

20    20

19

16

# FIG. 2

FIG. 3

FIG. 4

FIG. 5A

FIG. 5B

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19608632 A1
- US 2018188020 A1